# EUROPEAN PATENT SPECIFICATION

(11) **EP 4 024 829 B1**
(45) Date of publication and mention of the grant of the patent: **15.11.2023**
(21) Application number: 20866807.9
(22) Date of filing: 14.09.2020
(51) Int. Cl.: G06F 3/04847, G06F 3/16, G06F 3/01, H04M 1/02

(54) **VOLUME ADJUSTMENT METHOD AND ELECTRONIC DEVICE**
VERFAHREN ZUR VOLUMENEINSTELLUNGN UND ELEKTRONISCHE VORRICHTUNG
PROCÉDÉ DE RÉGLAGE DE VOLUME ET DISPOSITIF ÉLECTRONIQUE

(30) Priority: 19.09.2019 CN 201910889315
(43) Date of publication of application: 06.07.2022
(73) Proprietor: Huawei Technologies Co., Ltd., Longgang District Shenzhen, Guangdong 518129 (CN)
(72) Inventor: XU, Jie, Shenzhen, Guangdong 518129 (CN)
(74) Representative: Epping - Hermann - Fischer
(86) International application number: PCT/CN2020/115086
(87) International publication number: WO 2021/052290

(56) References cited:
- AU-B2- 2016 216 322
- CN-A- 103 828 334
- CN-A- 104 898 970
- CN-A- 106 201 311
- CN-A- 109 782 944
- CN-A- 109 782 944
- CN-A- 110 798 552
- US-A1- 2014 198 036
- US-A1- 2015 042 588

## Description

### CROSS-REFERENCE TO RELATED APPLICATIONS

This disclosure claims priority to Chinese Patent Application No. 201910889315.9, filed with the China National Intellectual Property Administration on September 19, 2019 and entitled "VOLUME ADJUSTMENT METHOD AND ELECTRONIC DEVICE".

### TECHNICAL FIELD

The present disclosure relates to the field of electronic device technologies, and in particular, to a volume adjustment method and an electronic device.

### BACKGROUND

In recent years, capacitive touchscreens are widely used in electronic products such as mobile phones, e-books, and digital cameras by virtue of their high sensitivity and fast response, and provide good user experience especially in the field of smartphones.

With updates of mobile phones, forms of the mobile phones are also constantly changing. For example, there is a mobile phone with a foldable screen. Currently, conventional physical buttons, such as a volume button and a screen lock button, are usually disposed on two sides of a mobile phone. After the mobile phone with the foldable screen is folded in half, the conventional physical buttons cannot be disposed on a folded side, and the physical buttons can be disposed only on the other side. In some scenarios, using the physical buttons is inconvenient for a user. If the foldable screen supports a plurality of folds, for example, two folds are supported, and both a left part and a right part may be folded to a rear of the mobile phone, the conventional physical buttons cannot be placed in foldable areas of the left and right sides. In this case, the physical buttons cannot be used to adjust volume, which severely affects user experience.
Document CN 109 782 944 A and its family member US 2022/053080 A1 describes a method including the steps of: determining a first device status when at a first moment; determining a touch parameter of a first side area of the curved screen of the electronic device as a first response threshold based on the first device status, where a pressure sensor is disposed in the first side area of the curved screen; receiving a first operation; responding to the first operation when the first operation meets the first response threshold; determining a second device status at a second moment; adjusting the touch parameter from the first response threshold to a second response threshold based on the second device status; receiving a second operation of the user in the first side area of the curved screen; and responding to the second operation when a pressure threshold of the second operation meets the second response threshold.
Document AU 2016 216 322 B2 relates to an electronic device comprising a key button that can be assembled to keep the key button in place in the housing of the electronic device and functional without having to completely assemble the housing of the electronic device.
Document US 2015/042588 A1 provides a mobile terminal including a display unit configured to display screen information and receive a user's touch input generating a first control command for changing the screen information, a bezel portion formed to surround an edge of the display unit to support the display unit and provided with a touch sensor receiving a user's touch input, and a controller configured to generate a second control command for changing the screen information by a user's consecutive touch input moving along at least one region of the bezel portion, wherein the controller controls the display unit to change the screen information based on at least one of the first and the second control command distinguished from each other.
Document CN 106 201 311 A provides a volume adjusting method and a mobile terminal. The volume adjusting method comprises following steps: if the pressure generated when a user presses a preset sensing area is detected to be larger than a preset pressure threshold and input of preset operation by the user on the touch screen is detected, volume adjustment is enabled, a sliding locus input by the user in a preset volume adjustment area is acquired, the volume adjustment amount is determined according to the sliding locus, and current volume is adjusted on the basis of the volume adjustment amount.

### SUMMARY

This disclosure provides a volume adjustment method and an electronic device, so that a user can adjust volume of an electronic device in various scenarios.
The present invention is set out by the set of appended claims. In the following, parts of the description and drawing referring to implementations and examples, which are not covered by the claims are not presented as embodiments of the invention, but as illustrative examples useful for understanding the invention.

According to a first aspect, an embodiment of this disclosure provides a volume adjustment method, applied to an electronic device having a curved screen with a left side and a right side both being arc-shaped. The method includes: receiving a first operation of a user in a first side area of the curved screen, where the first side area is either the left side or the right side; in response to the first operation, displaying, by the electronic device, first prompt information at an operation position corresponding to the first operation, where the first prompt information includes a first prompt identifier used to increase volume and a second prompt identifier used to decrease the volume; and increasing the volume in response to a second operation when the second operation of the user on the first prompt identifier is detected; or decreasing the volume in response to a third operation when the third operation of the user on the second prompt identifier is detected.

Based on this solution, an objective of volume adjustment can be achieved by performing an operation on a prompt identifier displayed on the curved screen of the electronic device, without relying on a physical button to adjust the volume, so that the user can conveniently adjust the volume of the electronic device in various scenarios. In addition, in this solution, the prompt identifier is first displayed, and the volume can be adjusted only after the operation is performed on the prompt identifier. A misoperation of the user may be filtered out to reduce a probability of a misoperation on the curved screen.

In a possible design, any one of the first operation, the second operation, and the third operation is a slide operation or a press operation.

In the invention, the increasing the volume in response to a second operation when the second operation of the user on the first prompt identifier is received includes when the second operation of the user on the first prompt identifier is received, increasing the volume in response to the second operation, and displaying second prompt information at an operation position corresponding to the second operation, where the second prompt information is used to indicate a change status of the volume increase. The decreasing the volume in response to a third operation when the third operation of the user on the second prompt identifier is received includes: when the third operation of the user on the second prompt identifier is received, decreasing the volume in response to the third operation, and displaying third prompt information at an operation position corresponding to the third operation, where the third prompt information is used to indicate a change status of the volume decrease.

According to this design, when the operations of the user on the first prompt identifier and the second prompt identifier are received, the corresponding prompt information is displayed, so that the user can learn a volume change status.

In a possible design, both the second prompt information and the third prompt information are volume bars, or both the second prompt information and the third prompt information are volume values.

In a possible design, the method may further include: If both the second prompt information and the third prompt information are the volume bars, when a finger of the user slides in the first side area, a position of the volume bar corresponds to a slide position of the finger. In other words, when the user performs the second operation on the first prompt identifier, the volume is increased in response to the second operation, and the volume bar is displayed. When the user performs the third operation on the second prompt identifier, the volume is decreased in response to the third operation, and the volume bar is displayed. In addition, a progress of the volume bar corresponds to the slide position of the finger of the user. To be specific, the progress of the volume bar reaches a position to which the finger slides, so that user experience can be improved.

In a possible design, if both the second prompt information and the third prompt information are the volume values, the volume values include a first value used to indicate current volume and a second value used to indicate maximum volume.

In a possible design, the first prompt identifier and the second prompt identifier are dots. In this way, an effect of prompting the user can be achieved while viewing other content on the screen by the user is not affected. Alternatively, the first prompt identifier is a plus sign, and the second prompt identifier is a minus sign. The plus sign may more intuitively indicate an operation position used to increase the volume, and the minus sign may more intuitively indicate an operation position used to decrease the volume.

In a possible design, a distance between the first prompt identifier and the operation position corresponding to the first operation is less than a distance between the second prompt identifier and the operation position corresponding to the first operation. In this way, an accidental touch occurs only when a thumb slides downward for a larger distance, and a downward distance is greater than an upward distance. The thumb is less likely to reach a position of the second prompt identifier, thus a probability of the accidental touch is reduced.

In a possible design, the first side area may be an entire side or a partial side of the curved screen.

In a possible design, a curvature of the arc is greater than 70 degrees.

In a possible design, the method further includes: when the second operation of the user on the first prompt identifier is received, prompting the user through vibration with a first vibration intensity; or when the third operation of the user on the second prompt identifier is received, prompting the user through vibration with a second vibration intensity, where the first vibration intensity differs from the second vibration intensity, for example, the first vibration intensity is greater than the second vibration intensity. The design allows the user to determine positions that the finger reaches by sensing different vibration intensities without looking at the screen.

In a possible design, the method further includes: when the second operation of the user on the first prompt identifier is received, prompting the user through vibration with a first vibration frequency; or when the third operation of the user on the second prompt identifier is received, prompting the user through vibration with a second vibration frequency, where the first vibration frequency differs from the second vibration frequency, for example, the first vibration frequency is higher than the second vibration frequency. The design allows the user to determine positions that the finger reaches by sensing different vibration frequencies without looking at the screen.

In a possible design, the method further includes: when it is detected that the electronic device is switched from portrait mode to landscape mode, moving a display area of the first prompt information from an area near an end of the first side area to a middle area of the first side area. With this design, a misoperation caused by the finger of the user often accidentally touching an area near an end of a side area when the screen is in landscape mode can be prevented.

According to a second aspect, an example of this disclosure, useful for understanding the context of the invention, provides a volume adjustment method, applied to an electronic device having a curved screen with a left side and a right side both being arc-shaped. The method includes: receiving a first slide operation of a user on the curved screen; if it is determined that a slide distance of the first slide operation is greater than a preset distance, vibrating, in response to the first slide operation, to notify the user that the electronic device enters a volume adjustment status, where if the first slide operation is sliding from a side area of the curved screen to a center of the screen, the volume adjustment status is a volume decrease state; or if the first slide operation is sliding from a bottom area of the curved screen to the center of the screen, the volume adjustment status is a volume increase state; receiving a second slide operation of the user, where a start point of the second slide operation is an end point of the first slide operation; and adjusting volume based on the volume adjustment status in response to the second slide operation.

Based on this solution, an objective of adjusting the volume can be achieved by performing a slide operation on the curved screen of the electronic device, without relying on a physical button to adjust the volume, so that the user can conveniently adjust the volume of the electronic device in various scenarios. In addition, this solution can further be applied to a scenario in which looking at the curved screen to adjust the volume is inconvenient. For example, during a call, an operation is first performed on the curved screen, the user is notified through vibration that the electronic device enters the volume adjustment status, and then the volume is adjusted. In this way, when looking at the screen is inconvenient, the user can easily adjust the volume.

According to a third aspect, an example of this disclosure, useful for understanding the context of the invention, provides a response method, applied to an electronic device having a curved screen with a left side and a right side both being arc-shaped. The method includes: receiving a first operation of a user in a first side area of the curved screen; displaying, by the electronic device, in response to the first operation, first prompt information at an operation position corresponding to the first operation, where the first prompt information includes a first prompt identifier used to implement a first function and a second prompt identifier used to implement a second function; and when a second operation of the user on the first prompt identifier is received, implementing the first function in response to the second operation; or when a third operation of the user on the second prompt identifier is received, implementing the second function in response to the third operation.

The first function may be a screenshot function, and the second function may be a two-dimensional code-based payment function. Alternatively, the first function is a power button function, and the second function is a volume adjustment function.

Based on this solution, the electronic device can implement different functions by performing operations on different prompt identifiers displayed on the curved screen, without relying on physical buttons to implement various functions, so that the user can conveniently perform various functions of the electronic device in various scenarios. In addition, in this solution, a prompt identifier is first displayed, and a corresponding function can be implemented only after an operation is performed on the prompt identifier. A misoperation of the user may be filtered out to reduce a probability of a misoperation on the curved screen.

According to a fourth aspect, an embodiment of this disclosure provides an electronic device, including a processor, a memory, and a touchscreen having a curved screen, where the touchscreen is used to receive an operation of a user; and the memory is used to store one or more computer programs, and when the computer programs are executed by the processor, the electronic device is enabled to perform the following operations: when a first operation of the user in a first side area of the curved screen is received, displaying, in response to the first operation, first prompt information at an operation position corresponding to the first operation, where the first prompt information includes a first prompt identifier used to increase volume, and a second prompt identifier used to decrease the volume; and increasing the volume in response to a second operation when the second operation of the user on the first prompt identifier is received; or decreasing the volume in response to a third operation when the third operation of the user on the second prompt identifier is received.

In a possible design, the first operation is a slide operation or a press operation, and the second operation is a slide operation or a press operation.

In the invention, the processor is specifically configured to: when the second operation of the user on the first prompt identifier is received, increase the volume in response to the second operation, and display second prompt information at an operation position corresponding to the second operation, where the second prompt information is used to indicate a change status of volume increase; or when the third operation of the user on the second prompt identifier is received, decrease the volume in response to the third operation, and display third prompt information at an operation position corresponding to the third operation, where the third prompt information is used to indicate a change status of volume decrease.

In a possible design, both the second prompt information and the third prompt information are volume bars, or both the second prompt information and the third prompt information are volume values.

In a possible design, the processor is further configured to: if both the second prompt information and the third prompt information are the volume bars, when a finger of the user slides in the first side area, a position of the volume bar corresponds to a slide position of the finger.

In a possible design, if both the second prompt information and the third prompt information are the volume values, the volume values include a first value used to indicate current volume and a second value used to indicate maximum volume.

In a possible design, the first prompt identifier and the second prompt identifier are dots; or the first prompt identifier is a plus sign, and the second prompt identifier is a minus sign.

In a possible design, a distance between the first prompt identifier and the operation position corresponding to the first operation is less than a distance between the second prompt identifier and the operation position corresponding to the first operation.

In a possible design, the first side area is an entire side or a partial side of the curved screen.

In a possible design, a curvature of the arc is greater than 70 degrees.

In a possible design, the processor is further configured to: when the second operation of the user on the first prompt identifier is received, prompt the user through vibration with a first vibration intensity; or when the third operation of the user on the second prompt identifier is received, use a second vibration intensity prompt the user through vibration, where the first vibration intensity differs from the second vibration intensity.

In a possible design, the processor is further configured to: when the second operation of the user on the first prompt identifier is received, prompt the user through vibration with a first vibration frequency; or when the third operation of the user on the second prompt identifier is received, prompt the user through vibration with a second vibration frequency, where the first vibration frequency differs from the second vibration frequency.

In a possible design, the processor is further configured to: when it is detected that the electronic device is switched from portrait mode to landscape mode, move a display area of the first prompt information from an area near an end of the first side area to a middle area of the first side area.

According to a fifth aspect, an example of this disclosure, useful for understanding the context of the invention, provides an electronic device, including a processor, a memory, and a touchscreen having a curved screen, where the touchscreen is used to receive an operation of a user; and the memory is used to store one or more computer programs, and when the computer programs are executed by the processor, the electronic device is enabled to perform the following operations: when a first slide operation of the user on the curved screen is received, if it is determined that a slide distance of the first slide operation is greater than a preset distance, vibrating, in response to the first slide operation, to notify the user that the electronic device enters a volume adjustment status, where if the first slide operation is sliding from a side area of the curved screen to a center of the screen, the volume adjustment status is a volume decrease state; or if the first slide operation is sliding from a bottom area of the curved screen to the center of the screen, the volume adjustment status is a volume increase state; receiving a second slide operation of the user, where a start point of the second slide operation is an end point of the first slide operation; and adjusting volume based on the volume adjustment status in response to the second slide operation.

According to a sixth aspect, an example of this, useful for understanding the context of the invention, provides an electronic device, including a processor, a memory, and a touchscreen having a curved screen, where the touchscreen is used to receive an operation of a user; and the memory is used to store one or more computer programs, and when the computer programs are executed by the processor, the electronic device is enabled to perform the following operations: when a first operation of the user in a first side area of the curved screen is received, displaying, by the electronic device, in response to the first operation, first prompt information at an operation position corresponding to the first operation, where the first prompt information includes a first prompt identifier used to implement a first function, and a second prompt identifier used to implement a second function; and when a second operation of the user on the first prompt identifier is received, implementing the first function in response to the second operation; or when a third operation of the user on the second prompt identifier is received, implementing the second function in response to the third operation. The first function may be a screenshot function, and the second function may be a two-dimensional code-based payment function. Alternatively, the first function is a power button function, and the second function is a volume adjustment function.

According to a seventh aspect, an embodiment of this disclosure further provides an apparatus. The apparatus includes modules/units for performing the method according to any possible design of any one of the foregoing aspects. These modules/units may be implemented by hardware, or may be implemented by hardware executing corresponding software.

According to an eighth aspect, an embodiment of this disclosure further provides a computer-readable storage medium. The computer-readable storage medium includes a computer program, and when the computer program is run on an electronic device, the electronic device is enabled to perform the method according to any possible design of any one of the foregoing aspects
According to a ninth aspect, an embodiment of this disclosure further provides a computer program product. When the computer program product runs on a terminal, the electronic device is enabled to perform the method in any possible design in any one of the foregoing aspects.

These aspects or other aspects of this disclosure are clearer and more comprehensible in the following descriptions of embodiments.

### BRIEF DESCRIPTION OF DRAWINGS

FIG. 1 is a schematic diagram of a hardware structure of an electronic device according to an example of this disclosure;
FIG. 2 is a schematic diagram of a software structure of an electronic device according to an example of this disclosure;
FIG. 3(a) is a three-dimensional diagram of a mobile phone to which an example of this disclosure is applicable;
FIG. 3(b) is a cut-away view of a mobile phone to which an example of this disclosure is applicable;
FIG. 4(a) and FIG. 4(b) are cut-away views of a mobile phone having a curved display to which an example of this disclosure is applicable;
FIG. 5 is a schematic diagram of a position of a side area according to an example of this disclosure;
FIG. 6(a) to FIG. 6(c) are a schematic diagram of a group of interfaces according to an example of this disclosure;
FIG. 7(a) to FIG. 7(d) are a schematic diagram of another group of interfaces according to an example of this disclosure;
FIG. 8(a) to FIG. 8(d) are a schematic diagram of another group of interfaces according to an example of this disclosure;
FIG. 9(a) to FIG. 9(d) are a schematic diagram of vibration intensities and vibration frequencies according to an example of this disclosure;
FIG. 10(a) and FIG. 10(b) are a schematic diagram of another group of interfaces according to an example of this disclosure;
FIG. 11(a) and FIG. 11(b) are a schematic diagram of another group of interfaces according to an example of this disclosure;
FIG. 12 is a schematic diagram of holding a phone with both hands according to an example of this disclosure;
FIG. 13(a) to FIG. 13(e) are a schematic diagram of changes of an interaction area used to adjust volume according to an example of this disclosure;
FIG. 14 is a schematic diagram of holding a phone with one hand in a calling scenario according to an example of this disclosure;
FIG. 15(a) to FIG. 15(d) are a schematic diagram of volume adjustment according to an example of this disclosure;
FIG. 16 is a schematic diagram of a volume adjustment method according to an example of this disclosure; and
FIG. 17 is a schematic diagram of a structure of an electronic device according to an example of this disclosure.

### DETAILED DESCRIPTION

For ease of understanding, example descriptions of some concepts related to examples of this disclosure are provided for reference. Details are as follows.

A curved screen is a display that uses a flexible material. Compared with a flat screen, the curved screen has better elasticity and is not easy to break. The curved screen uses non-rigid glass as a substrate, and has better elasticity and is not easy to break. Therefore, a screen wear probability can be reduced, especially for a mobile phone screen with a relatively high touch rate.

A capacitive touchscreen technology works through current induction of a human body. When a finger touches a touchscreen, because of an electric field of the human body, a coupling capacitor is formed between a user and a surface of the touchscreen, and the finger sucks a small current from a contact point, and then a capacitive signal is generated. This current separately flows out from electrodes on four corners of the touchscreen. Currents flowing through the four electrodes are proportional to distances from the finger to the four corners. A processor can obtain a position of a touch point by accurately calculating ratios of the four currents. Therefore, an electronic device can detect a touch operation of the user based on a change in a capacitance value of a touch position in an entire screen.

A non-pressure touch is a touch without obvious pressure by the finger of the user on the touchscreen, that is, a pressure is less than a specific threshold. Each touch can be detected by a touch sensor. After the touchscreen is touched once with a non-pressure touch, the finger needs to lift off the screen, which is different from a pressure press. Then touching the touchscreen again by the finger is recognized as a second touch.

The following describes technical solutions in examples of this disclosure with reference to the accompanying drawings in examples of this disclosure. In the descriptions of examples of this disclosure, the following terms "first" and "second" are merely used for description, and shall not be understood as an indication or implication of relative importance or implicit indication of a quantity of indicated technical features. Therefore, a feature limited by "first" or "second" may explicitly or implicitly include one or more such features.

Examples disclosed in this disclosure may be applied to an electronic device on which a touchscreen is disposed. In some examples of this disclosure, the electronic device may be a portable electronic device including a function such as a personal digital assistant and/or a music player, for example, a mobile phone, a tablet computer, a wearable device with a wireless communication function (for example, a smartwatch), or a vehicle-mounted device. An example example of a portable electronic device includes but is not limited to a portable electronic device using iOS^{®}, Android^{®}, Microsoft^{®}, or another operating system. The portable electronic device may alternatively be, for example, a laptop (Laptop) having a touch-sensitive surface (for example, a touch panel). It should be further understood that, in some other examples of this disclosure, the electronic device may alternatively be a desktop computer with a touch-sensitive surface (for example, a touch panel).

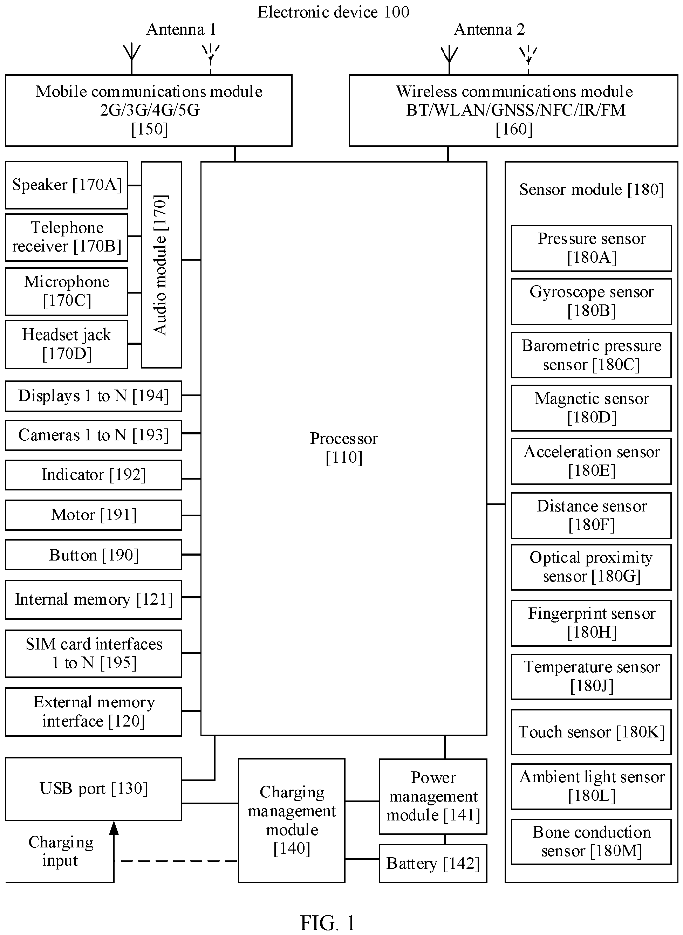

FIG. 1 is an example of a schematic diagram of a structure of an electronic device 100.

It should be understood that the electronic device 100 shown in the figure is merely an example, and the electronic device 100 may include more or fewer components than those shown in the figure, may combine two or more components, or may have different component configurations. Various components shown in the figure may be implemented in hardware, software, or a combination of hardware and software that includes one or more signal processing and/or application-specific integrated circuits.

As shown in FIG. 1, the mobile phone 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a telephone receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The following specifically introduces components of the electronic device 100 with reference to FIG. 1.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors. The controller may be a nerve center and a command center of the mobile phone 100. The controller may generate an operation control signal based on instruction operation code and a time sequence signal, to complete control of instruction reading and instruction execution.

A memory may be further disposed in the processor 110, and is configured to store instructions and data. In some examples, the memory in the processor 110 is a cache. The memory may store instructions or data just used or cyclically used by the processor 110. If the processor 110 needs to use the instructions or the data again, the processor 110 may directly invoke the instructions or the data from the memory, to avoid repeated access and reduce a waiting time of the processor 110. Therefore, system efficiency can be improved.

The processor 110 may perform a touchscreen volume adjustment method provided in this example of this disclosure. The processor may respond to a touch operation on the display, and display prompt information related to volume interaction displayed on an edge of a side of the display. When different components are integrated into the processor 110, for example, a CPU and a GPU are integrated, the CPU and the GPU may cooperate to perform the operation prompt method provided in examples of this disclosure. For example, in the operation prompt method, some algorithms are performed by the CPU, and the other algorithms are performed by the GPU, to obtain relatively fast processing efficiency.

In some examples, the processor 110 may include one or more interfaces. For example, the interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronization serial bus, and includes a serial data line (serial data line, SDA) and a serial clock line (serial clock line, SCL). In some examples, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the mobile phone 100.

The I2S interface may be configured to perform audio communication. In some examples, the processor 110 may include a plurality of groups of I2S buses. The processor 110 may be coupled to the audio module 170 through the I2S bus, to implement communication between the processor 110 and the audio module 170. In some examples, the audio module 170 may transfer an audio signal to the wireless communications module 160 through the I2S interface, to implement a function of answering a call by using a Bluetooth headset.

The PCM interface may also be configured to: perform audio communication, and sample, quantize, and code an analog signal. In some examples, the audio module 170 may be coupled to the wireless communications module 160 through a PCM bus interface. In some examples, the audio module 170 may alternatively transfer an audio signal to the wireless communications module 160 through the PCM interface, to implement a function of answering a call by using a Bluetooth headset. Both the I2S interface and the PCM interface may be used to perform audio communication.

The UART interface is a universal serial data bus, and is configured to perform asynchronous communication. The bus may be a two-way communications bus. The bus converts to-be-transmitted data between serial communication and parallel communication. In some examples, the UART interface is usually configured to connect the processor 110 to the wireless communications module 160. For example, the processor 110 communicates with a Bluetooth module in the wireless communications module 160 through the UART interface, to implement a Bluetooth function. In some examples, the audio module 170 may transfer an audio signal to the wireless communications module 160 through the UART interface, to implement a function of playing music by using a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some examples, the processor 110 communicates with the camera 193 through the CSI interface, to implement a photographing function of the mobile phone 100. The processor 110 communicates with the display 194 through the DSI interface, to implement a display function of the mobile phone 100.

The GPIO interface may be configured through software. The GPIO interface may be configured as a control signal or a data signal. In some examples, the GPIO interface may be configured to connect the processor 110 to the camera 193, the display 194, the wireless communications module 160, the audio module 170, the sensor module 180, and the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB Type C port, or the like. The USB port 130 may be configured to connect to the charger to charge the mobile phone 100, or may be configured to transmit data between the mobile phone 100 and a peripheral device, or may be configured to connect to a headset to play audio by using the headset. Alternatively, the interface may be configured to connect to another electronic device, for example, an AR device.

It may be understood that an interface connection relationship between the modules shown in this example of this disclosure is merely an example for description, and does not constitute a limitation on the structure of the mobile phone 100. In some other examples of this disclosure, the mobile phone 100 may alternatively use an interface connection manner different from that in the foregoing example, or use a combination of a plurality of interface connection manners.

The charging management module 140 is configured to receive a charging input from the charger. The charger may be a wireless charger or a wired charger. In some examples in which wired charging is used, the charging management module 140 may receive a charging input from the wired charger through the USB port 130. In some examples of wireless charging, the charging management module 140 may receive a wireless charging input by using a wireless charging coil of the mobile phone 100. The charging management module 140 may further supply power to the electronic device by using the power management module 141 when the battery 142 is charged.

The power management module 141 is configured to connect the battery 142, the charging management module 140, and the processor 110. The power management module 141 receives an input of the battery 142 and/or an input of the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery health status (electric leakage or impedance). In some other examples, the power management module 141 may alternatively be disposed in the processor 110. In some other examples, the power management module 141 and the charging management module 140 may alternatively be disposed in a same device.

A wireless communications function of the mobile phone 100 may be implemented by using the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the mobile phone 100 may be configured to cover one or more communication bands. Different antennas may be multiplexed to improve antenna utilization. For example, the antenna 1 may be multiplexed as a diversity antenna in a wireless local area network. In some other examples, the antenna may be used in combination with a tuning switch.

The mobile communications module 150 may provide a solution to wireless communications such as 2G/3G/4G/5G applied to the mobile phone 100. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation through the antenna 1. In some examples, at least some function modules of the mobile communications module 150 may be disposed in the processor 110. In some examples, at least some function modules of the mobile communications module 150 may be disposed in a same device as at least some modules of the processor 110.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal by using an audio device (which is not limited to the speaker 170A, the telephone receiver 170B, or the like), or displays an image or a video by using the display 194. In some examples, the modem processor may be an independent component. In some other examples, the modem processor may be independent of the processor 110, and is disposed in a same device with the mobile communications module 150 or another function module.

The wireless communications module 160 may provide a solution to wireless communications applied to the mobile phone 100, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communications module 160 may be one or more components integrating at least one communications processing module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert a processed signal into an electromagnetic wave for radiation through the antenna 2.

In some examples, the antenna 1 and the mobile communications module 150 of the mobile phone 100 are coupled, and the antenna 2 and the wireless communications module 160 of the mobile phone 100 are coupled, so that the mobile phone 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The mobile phone 100 implements a display function by using the GPU, the display 194, the application processor, and the like. The GPU is a microprocessor for image processing, and is connected to the display 194 and the application processor. The GPU is configured to: perform mathematical and geometric calculation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flex light-emitting diode (flex light-emitting diode, FLED), a mini-LED, a micro-LED, a micro-OLED, quantum dot light-emitting diodes (quantum dot light-emitting diodes, QLED), or the like. In some examples, the mobile phone 100 may include one or N displays 194, where N is a positive integer greater than 1.

In examples of this disclosure, the display 194 may be one integrated flexible display, or may be a spliced display including two rigid screens and one flexible screen located between the two rigid screens. When the processor 110 runs the volume adjustment methods provided in examples of this disclosure, when the display 194 is folded, and a touch operation is received on a screen, the processor 110 determines a touch position of the touch operation on the screen, and displays prompt information related to volume interaction at the touch position on the screen.

The mobile phone 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some examples, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as RGB or YUV. In some examples, the mobile phone 100 may include one or N cameras 193, where N is a positive integer greater than 1.

The digital signal processor is configured to process a digital signal, and may process another digital signal in addition to the digital image signal. For example, when the mobile phone 100 selects a frequency, the digital signal processor is configured to perform Fourier transform on frequency energy, and the like.

The video codec is configured to compress or decompress a digital video. The mobile phone 100 may support one or more video codecs. In this way, the mobile phone 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the mobile phone 100, such as image recognition, facial recognition, voice recognition, and text understanding, can be implemented by using the NPU.

The external memory interface 120 may be configured to connect to an external storage card such as a micro SD card, to extend a storage capability of the mobile phone 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or an address book) created during use of the mobile phone 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 executes various functional applications and data processing of the mobile phone 100 by running instructions stored in the internal memory 121 and/or instructions stored in the memory disposed in the processor.

The mobile phone 100 may implement an audio function such as music playing or recording by using the audio module 170, the speaker 170A, the telephone receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal. In some examples, the audio module 170 may be disposed in the processor 110, or some function modules of the audio module 170 are disposed in the processor 110.

The speaker 170A, also referred to as a "loudspeaker", is configured to convert an audio electrical signal into a sound signal. The mobile phone 100 may listen to music or answer a hands-free call through the speaker 170A.

The telephone receiver 170B, also referred to as an "earpiece", is configured to convert an audio electrical signal into a sound signal. When a call is answered or voice information is received by using the mobile phone 100, the telephone receiver 170B may be put close to a human ear to listen to a voice.

The microphone 170C, also referred to as a "mike" or a "mic", is configured to convert a sound signal into an electrical signal. When making a call or sending voice information, a user may make a sound by moving a human mouth close to the microphone 170C to input a sound signal to the microphone 170C. At least one microphone 170C may be disposed in the mobile phone 100. In some other examples, two microphones 170C may be disposed in the mobile phone 100, to collect a sound signal and further implement a noise reduction function. In some other examples, three, four, or more microphones 170C may alternatively be disposed in the mobile phone 100, to collect a sound signal, reduce noise, further identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some examples, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The mobile phone 100 determines pressure intensity based on a capacitance change. When a touch operation is performed on the display 194, the mobile phone 100 detects intensity of the touch operation by using the pressure sensor 180A. The mobile phone 100 may also calculate a touch position based on a detection signal of the pressure sensor 180A. In some examples, touch operations that are performed at a same touch position but have different touch operation intensity may correspond to different operation instructions.

The gyroscope sensor 180B may be configured to determine a motion posture of the mobile phone 100. In some examples, the gyroscope sensor 180B may be used to determine angular velocities of the mobile phone 100 around three axes (namely, x, y, and z axes). The gyroscope sensor 180B may be configured to perform image stabilization during photographing. The gyroscope sensor 180B may be further used in a navigation scenario and a motion-sensing game scenario.

The barometric pressure sensor 180C is configured to measure barometric pressure. In some examples, the mobile phone 100 calculates an altitude based on a value of the atmospheric pressure measured by the barometric pressure sensor 180C, to assist positioning and navigation.

The magnetic sensor 180D includes a Hall sensor. The mobile phone 100 may detect opening and closing of a flip cover by using the magnetic sensor 180D. In some examples, when the mobile phone 100 is a flip phone, the mobile phone 100 may detect opening and closing of a flip cover by using the magnetic sensor 180D. Further, a feature such as automatic unlocking upon opening of the flip cover is set based on a detected opening or closing state of the flip cover.

The acceleration sensor 180E may detect a magnitude of acceleration of the mobile phone 100 in various directions (usually on three axes). When the mobile phone 100 is static, a value and a direction of gravity may be detected. The acceleration sensor 180E may be further configured to identify a posture of the electronic device, and is used in an application such as switching between landscape mode and portrait mode or a pedometer.

The distance sensor 180F is configured to measure a distance. The mobile phone 100 may measure a distance through infrared or laser. In some examples, in a photographing scenario, the mobile phone 100 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The mobile phone 100 may emit infrared light by using the light-emitting diode. The mobile phone 100 detects reflected infrared light from a nearby object by using the photodiode. When sufficient reflected light is detected, it may be determined that there is an object near the mobile phone 100. When insufficient reflected light is detected, the mobile phone 100 may determine that there is no object near the mobile phone 100. The mobile phone 100 may detect, by using the optical proximity sensor 180G, that the user puts the mobile phone 100 close to an ear for conversation, so that automatic screen-off is implemented to save power. The optical proximity sensor 180G may also be used in a flip cover mode or a pocket mode to automatically unlock or lock the screen.

The ambient light sensor 180L is configured to sense ambient light brightness. The mobile phone 100 may adaptively adjust luminance of the display 194 based on sensed ambient light brightness. The ambient light sensor 180L may also be configured to automatically adjust a white balance during photographing. The ambient light sensor 180L may further cooperate with the optical proximity sensor 180G to detect whether the mobile phone 100 is in a pocket to prevent an accidental touch.

The fingerprint sensor 180H is configured to collect a fingerprint. The mobile phone 100 may implement fingerprint unlocking, application lock access, fingerprint-based photographing, fingerprint-based call answering, and the like by using a feature of the collected fingerprint. For example, the fingerprint sensor may be disposed on a front side (below the display 194) of the mobile phone 100, or the fingerprint sensor may be disposed on a rear side (below a rear camera) of the mobile phone 100. In addition, a fingerprint recognition function may be implemented by configuring the fingerprint sensor on the touchscreen. To be specific, the fingerprint sensor may be integrated with the touchscreen to implement the fingerprint recognition function of the mobile phone 100. In this case, the fingerprint sensor may be disposed in the touchscreen, or may be a part of the touchscreen, or may be disposed in the touchscreen in another manner. In addition, the fingerprint sensor may further be implemented as a full-panel fingerprint sensor. Therefore, the touchscreen may be considered as a panel on which a fingerprint may be collected at any position. In some examples, the fingerprint sensor may process the collected fingerprint (for example, whether fingerprint verification succeeds) and send a processed fingerprint to the processor 110. The processor 110 performs corresponding processing based on a fingerprint processing result. In some other examples, the fingerprint sensor may further send the collected fingerprint to the processor 110, so that the processor 110 processes the fingerprint (for example, verifies the fingerprint). The fingerprint sensor in this example of this disclosure may use any type of sensing technology, including but not limited to an optical sensing technology, a capacitive sensing technology, a piezoelectric sensing technology, an ultrasonic sensing technology, or the like.

The temperature sensor 180J is configured to detect a temperature. In some examples, the mobile phone 100 executes a temperature processing policy based on a temperature detected by the temperature sensor 180J. For example, when the temperature reported by the temperature sensor 180J exceeds a threshold, the mobile phone 100 reduces performance of a processor near the temperature sensor 180J, to reduce power consumption and implement heat protection. In other examples, when the temperature is lower than another threshold, the mobile phone 100 heats the battery 142, to avoid an abnormal shutdown of the mobile phone 100 caused by a low temperature. In some other examples, when the temperature is lower than still another threshold, the mobile phone 100 boosts an output voltage of the battery 142, to avoid an abnormal shutdown caused by a low temperature.

The touch sensor 180K is also referred to as a "touch panel". The touch sensor 180K may be disposed on the display 194, and the touch sensor 180K and the display 194 constitute a touchscreen, which is referred to as a "touchscreen". The touch sensor 180K is configured to detect a touch operation performed on or near the touch sensor 180K. The touch sensor may transfer the detected touch operation to the application processor, to determine a type of a touch event. A visual output related to the touch operation may be provided on the display 194. In other examples, the touch sensor 180K may be alternatively disposed on a surface of the mobile phone 100, and is located in a position different from that of the display 194.

The bone conduction sensor 180M may obtain a vibration signal. In some examples, the bone conduction sensor 180M may obtain a vibration signal of a vibration bone of a human vocal part. The bone conduction sensor 180M may also be in contact with a human pulse, to receive a blood pressure beating signal. In some examples, the bone conduction sensor 180M may alternatively be disposed in the headset, to obtain a bone conduction headset. The audio module 170 may obtain a voice signal through parsing based on the vibration signal that is of the vibration bone of the vocal part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The mobile phone 100 may receive a button input, and generate a button signal input related to a user setting and function control of the mobile phone 100.

The motor 191 may generate a vibration prompt. The motor 191 may be configured to produce an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder scenario, an information receiving scenario, an alarm clock scenario, and a game scenario) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or plugged from the SIM card interface 195, to implement contact with or separation from the mobile phone 100. The mobile phone 100 may support one or N SIM card interfaces, where N is a positive integer greater than 1. The SIM card interface 195 can support a nano-SIM card, a micro-SIM card, a SIM card, and the like. A plurality of cards may be simultaneously inserted into a same SIM card interface 195. The plurality of cards may be of a same type or of different types. The SIM card interface 195 may also be compatible with different types of SIM cards. The SIM card interface 195 is also compatible with an external storage card. The mobile phone 100 interacts with a network by using the SIM card, to implement functions such as calling and data communications. In some examples, the mobile phone 100 uses an eSIM, namely, an embedded SIM card. The eSIM card may be embedded in the mobile phone 100, and cannot be separated from the mobile phone 100.

Although not shown in FIG. 1, the mobile phone 100 may further include a Bluetooth apparatus, a positioning apparatus, a flash, a micro projection apparatus, a near field communication (near field communication, NFC) apparatus, and the like. Details are not described herein.

A software system of the electronic device 100 may use a hierarchical architecture. In examples of this disclosure, an Android system with a hierarchical architecture is used as an example to describe a software structure of the electronic device 100.

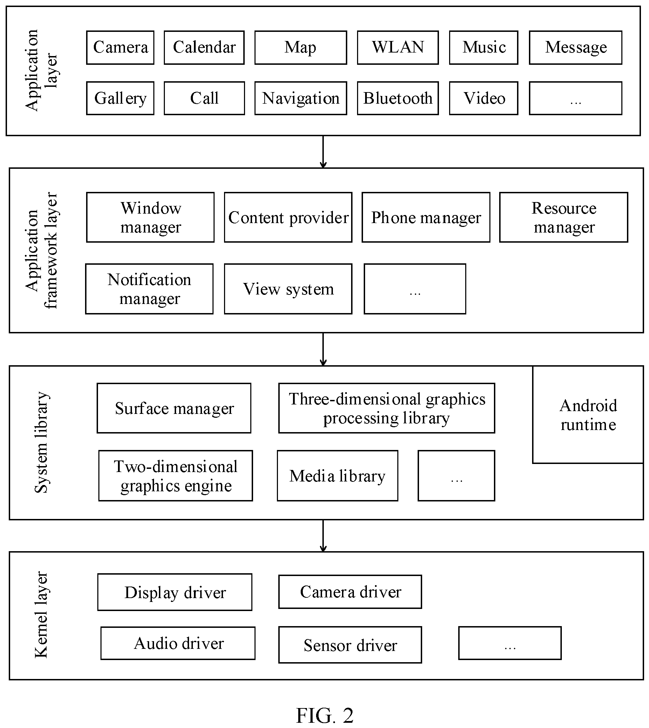

FIG. 2 is a block diagram of the software structure of the electronic device 100 according to an example of the present disclosure.

In a hierarchical architecture, software is divided into several layers, and each layer has a clear role and task. The layers communicate with each other through a software interface. In some examples, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Dialer, Camera, Gallery, Calendar, Call, Map, Navigation, WLAN, Bluetooth, Music, Video, and Message.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and received, a browsing history and bookmarks, an address book, and the like.

The view system includes visual controls, such as a control for displaying a text and a control for displaying a picture. The view system may be configured to construct an application. A display interface may include one or more views. For example, a display interface including an SMS message notification icon may include a text display view and a picture display view.

The phone manager is configured to provide a communications function of the electronic device 100, for example, management of a call status (including answering, declining, or the like).

The resource manager provides various resources for an application, such as a localized character string, an icon, a picture, a layout file, and a video file.

The notification manager enables an application to display notification information in a status bar, and may be configured to convey a notification type message, where the displayed notification information may automatically disappear after a short pause without user interaction. For example, the notification manager is configured to notify download completion, provide a message notification, and the like. The notification manager may alternatively be a notification that appears in a top status bar of the system in a form of a graph or a scroll bar text, for example, a notification of an application running on the background or a notification that appears on the screen in a form of a dialog window. For example, text information is displayed in the status bar, an announcement is produced, the electronic device vibrates, or an indicator light blinks.

The Android runtime includes a kernel library and a virtual machine. The Android runtime is responsible for scheduling and management of the Android system.

The kernel library includes two parts: a function that needs to be invoked in Java language and a kernel library of Android.

The application layer and the application framework layer run on the virtual machine. The virtual machine executes Java files at the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording of audio and video in a plurality of commonly used formats, static image files, and the like. The media library may support a plurality of audio and video encoding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

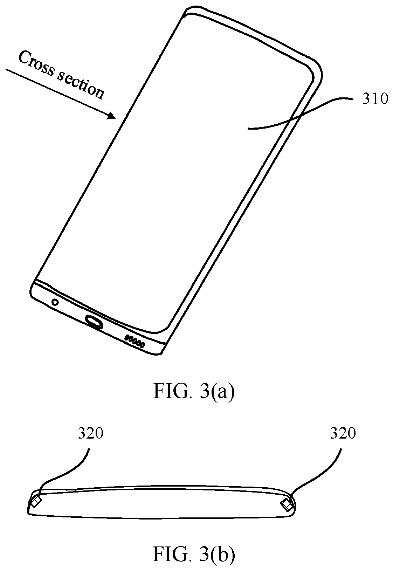

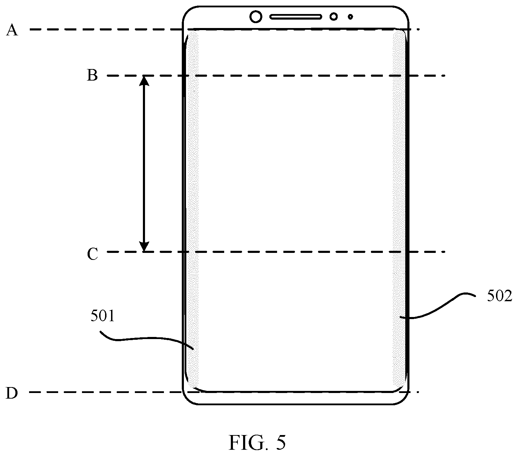

The following uses an example in which the electronic device is a mobile phone. FIG. 3(a) is a three-dimensional diagram of the mobile phone to which an example of this disclosure is applicable. FIG. 3(b) is a cut-away view obtained by cutting the mobile phone shown in FIG. 3(a) along a section parallel to a short side of the mobile phone. A screen of the mobile phone in FIG. 3(a) and FIG. 3(b) is a curved display 310 of an arc-shaped structure. Optionally, a curvature of the arc is greater than 70 degrees. For example, the curved display 310 may also be referred to as a waterfall display, and left and right side areas are bent downward almost vertically, that is, a side radian is close to 90 degrees. As shown in FIG. 3(a), a charging port and a speaker opening are disposed at a bottom of the mobile phone. A pressure sensor may be further disposed in a side area of the curved display of the mobile phone, and is configured to detect a magnitude of a force of a user on the curved display. As shown in the cut-away view of the mobile phone shown in FIG. 3(b), a pressure sensor 320 is disposed below a capacitive touchscreen of the side area. Refer to a front side of the curved display shown in FIG. 5. A left side area 501 (a gray area) and a right side area 502 (a gray area) are arc-shaped. In FIG. 5, the gray areas are used only to indicate positions of the arc-shaped side areas, but are not used to limit a display effect of the side areas to gray. The same is true of a gray area in the following drawings.

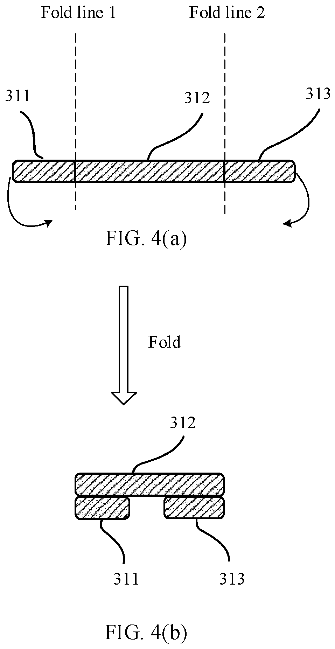

FIG. 4(a) and FIG. 4(b) are cut-away views of the mobile phone having a foldable curved display 310. A fold line 1 and a fold line 3 shown in FIG. 4(a) are used to divide the curved display 310 into three display areas, which respectively are a display area 311, a display area 312, and a display area 313. The mobile phone is folded to a back of the mobile phone according to the fold line 1 and the fold line 2 shown in FIG. 4(a). As shown in FIG. 4(b), the display area 311 and the display area 313 are folded to the back. In a conventional mobile phone, physical buttons such as a volume button and a power button are disposed on a side. However, after the mobile phone is folded and in a folded state shown in FIG. 4(b), the user cannot use the physical buttons that are disposed on the side before the mobile phone is folded. For example, in a scenario in which the user is making a call by using a mobile phone in a folded state, the user thinks that a sound is small, and the volume button needs to be pressed. In this case, the user needs to first unfold the mobile phone to press the volume button on the side, which brings inconvenience to the user.

Therefore, this disclosure provides a volume adjustment method. The method is applicable to an electronic device having a curved screen, or is applicable to an electronic device having a foldable screen. The method includes: When the electronic device detects a touch operation performed by a user on the curved screen in a side area, prompt information for volume interaction is displayed at an operation position corresponding to the touch operation, where the prompt information may include a volume up virtual button and a volume down virtual button, a distance between the volume up virtual button and the operation position corresponding to the touch operation is a first preset distance, a distance between the volume up virtual button and the operation position corresponding to the touch operation is a second preset distance, and the first preset distance may be the same as or different from the second preset distance; and when the electronic device detects that the user performs an operation on the volume up virtual button, volume of the electronic device is increased; or when the electronic device detects that the user performs an operation on the volume down virtual button, volume of the electronic device is decreased. In the method, an operation on a virtual button of the curved screen can be implemented, and volume adjustment does not need to rely on a physical button. In addition, in the method, the virtual button is first displayed, and after the operation is performed on the virtual button, the volume can be adjusted. A misoperation of the user may be filtered out to reduce a probability of a misoperation on the curved screen, so that user experience can be improved.

In an example, the prompt information for volume interaction may include two dots. One dot identifier for the user is used to increase the volume, and the other is used to decrease the volume. Optionally, in this way, while viewing other content on the screen by the user is not affected, an effect of prompting the user can be achieved.

In another example, the prompt information for volume interaction may alternatively be a plus sign and a minus sign, where the plus sign may more intuitively indicate an operation position used to increase the volume, and the minus sign may more intuitively indicate an operation position used to decrease the volume.

With reference to the accompanying drawings, the following describes in detail the volume adjustment method provided in this example of this disclosure by using an example in which the electronic device is a mobile phone.

It should be noted that, when the user performs the touch operation on the curved screen in the side area, the mobile phone displays, in response to the touch operation, the prompt information for volume interaction in the side area. The prompt information for volume interaction may be displayed in side areas of left and right sides or in a side area of either the left side or the right side of the mobile phone, for example, a side area between a position A and a position D shown in FIG. 5. To be specific, when a thumb of the user performs an operation at any position of the side area between the position A and the position D, the prompt information for volume interaction may be displayed at the corresponding operation position. The position A is a position at the top of a display area of the mobile phone in portrait mode, and the position D is a position at the bottom of the display area of the mobile phone in portrait mode. Usually, when a user holds a mobile phone with one hand, a thumb touches a middle area or an upper middle area of a side of the mobile phone. In consideration of a user habit, to facilitate the user to use a volume adjustment virtual button to adjust volume when holding the mobile phone with one hand, the prompt information for volume interaction may be displayed in the side areas of the left and right sides or in a part of the side area of either the left side or the right side, for example, a side area between a position B and a position C shown in FIG. 5. A distance between the position B and the position A is about one-tenth of a length of the entire display area, and a distance between the position C and the position A is about one-half of the length of the entire display area. For example, a distance between the position A and the position D is 15 cm, the distance between the position B and the position A is 1.5 cm, and the distance between the position C and the position A is 7 cm. That is, when the thumb of the user performs an operation at any position in the side area between the position B and the position C, the prompt information for volume interaction may be displayed at the corresponding operation position.

It should be noted that, in a scenario in which the thumb of the user touches the curved screen, a capacitive signal generated when the thumb presses the curved screen actually may be approximately an ellipse, that is, the thumb actually touches an elliptical area instead of a point. A center of gravity of the elliptical area may be determined based on a capacitance value of each pixel in the area, and used as an operation position.

The following shows an example in which the thumb of the user performs an operation on the side area between the position B and the position C on the left side of the mobile phone, to describe the prompt information for volume interaction.

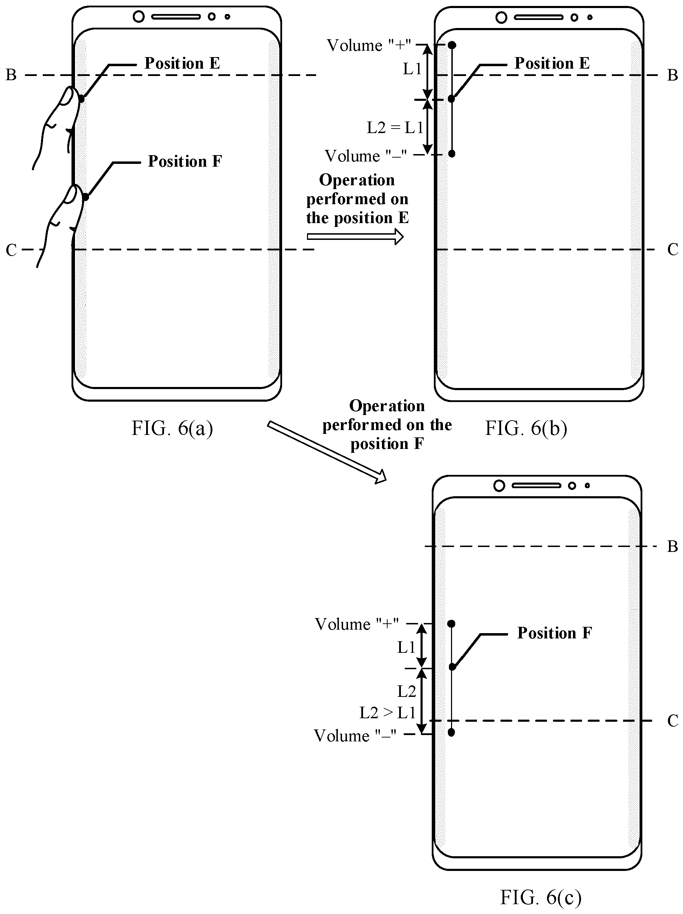

In this example of this disclosure, the prompt information for volume interaction may be displayed at the operation position of the thumb of the user. In other words, the prompt information for volume interaction is displayed at a position at which the thumb of the user touches the left side of the mobile phone. As shown in FIG. 6(a), when a finger of the user performs an operation on a position E of the left side area of the mobile phone, the mobile phone receives a touch operation performed on the position E, and displays prompt information shown in FIG. 6(b) at the position E. The prompt information includes the volume up ("+") virtual button and the volume down ("-") virtual button, which are used for indication. When the thumb of the user performs an operation on a position F of the left side area of the mobile phone, the mobile phone receives a touch operation performed on the position F, and displays prompt information shown in FIG. 6(c) at the position F. The prompt information includes the volume up ("+") virtual button and the volume down ("-") virtual button, which are used for indication.

In some examples, a distance between the volume "+" virtual button and the operation position is equal to a distance between the volume "-" virtual button and the operation position. As shown in FIG. 6(b), a distance between the volume "+" virtual button and the position E is L₁. A distance between the volume "-" virtual button and the position E is L₂, where L₁ is equal to L₂.

In some other examples, considering that a distance that can be reached when the thumb of the hand holding the mobile phone slides upward in the side area is smaller than a distance that can be reached when the thumb slides downward, and that, after the thumb touches the side area, a downward accidental touch is more likely to occur than an upward accidental touch, and in consideration of factors such as accidental touch prevention and difficulty of thumb sliding, the distance between the volume "+" virtual button and the operation position may be set to be less than the distance between the volume "-" virtual button and the operation position. As shown in FIG. 6(c), a distance between the volume "+" virtual button and the position E is L₁, and the distance between the volume "-" virtual button and the position E is L₂, where L₁ is less than L₂. In this way, an accidental touch occurs only when the thumb slides downward for a larger distance, and a downward distance is greater than an upward distance. The thumb is less likely to reach the volume "-" virtual button, thus a probability of the accidental touch is reduced.

In the foregoing FIG. 6(b) and FIG. 6(c), an example in which the prompt information for volume interaction is displayed in the left side area of the mobile phone is used for description. In some other examples, the prompt information for volume interaction may alternatively be displayed in a right side area. This is not limited in this disclosure.

It should be noted that the touch operation that triggers display of the prompt information for volume interaction may be a single tap (a non-pressure tap) of the thumb on a side area of the curved screen, or may be a double tap on the side area of the curved screen, or may be a slide gesture, or may be a long press on the side area of the curved screen, or may be another operation that can trigger the display of the prompt information for volume interaction. This is not limited in this example of this disclosure.

In addition, the prompt information for volume interaction may be continuously displayed in the side area of the curved screen, or may be displayed within a preset duration. For example, if the preset duration is 1 minute, and no operation is further performed within 1 minute, the prompt information for volume interaction is hidden.

After the prompt information for volume interaction is displayed in the side area of the curved screen, the user may further perform operations on the volume "+" virtual button and the volume "-" virtual button, to adjust the volume.

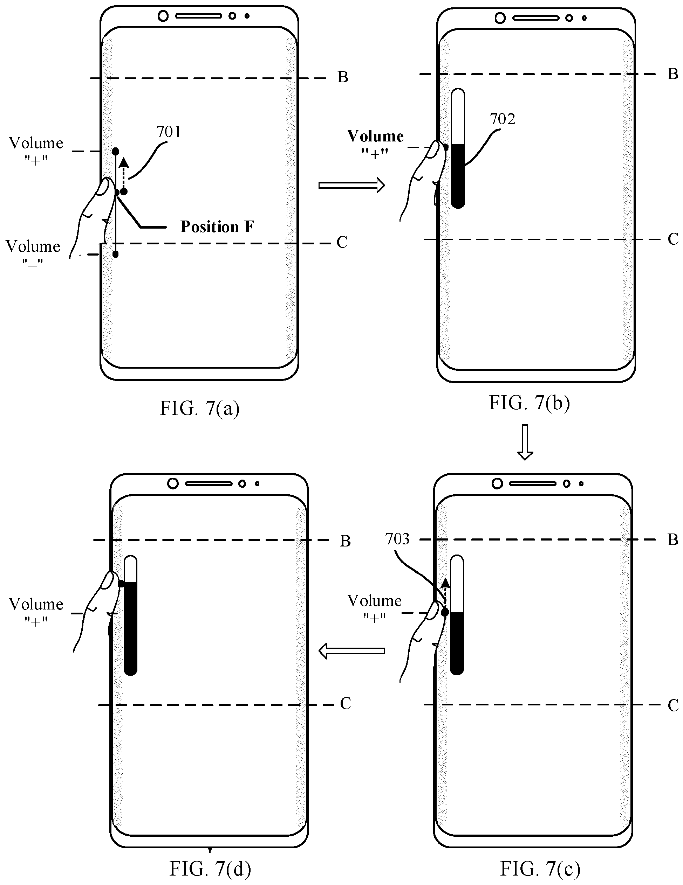

For example, the curved screen of the electronic device displays the prompt information for volume interaction shown in FIG. 6(c). The thumb of the user continues to perform an operation at the position F shown in FIG. 6(c). As shown in FIG. 7(a), after the thumb of the user slides upward from the position F in a direction of a dashed line 701 to a position of the volume "+" virtual button, a volume bar 702 shown in FIG. 7(b) is displayed, where a volume value of the volume bar 702 is flush with the operation position of the thumb. Then the thumb of the user may continue to slide upward in the direction of the dashed line 703 shown in FIG. 7(c), and the volume may be increased to a level shown in FIG. 7(d).

The volume bars in examples of this disclosure, for example, the volume bar 702 and a volume bar 802, may be displayed in a non-arc part of the side area, so that the user can view the volume bar conveniently.

In addition, the thumb of the user may perform the touch operation on an arc part of the side area, and the prompt information for volume interaction is displayed on the non-arc part of the side area, so that the user can conveniently view the prompt information for volume interaction. In this case, the thumb of the user needs to perform an operation on the prompt information for the volume interaction in the non-arc part, so that the volume bar is displayed in the non-arc part of the side area. Certainly, the prompt information for volume interaction may alternatively be displayed in the arc part of the side area. In this way, the thumb of the user may continue to perform an operation on the prompt information for volume interaction in the arc part, so that the volume bar is displayed in the non-arc part of the side area.

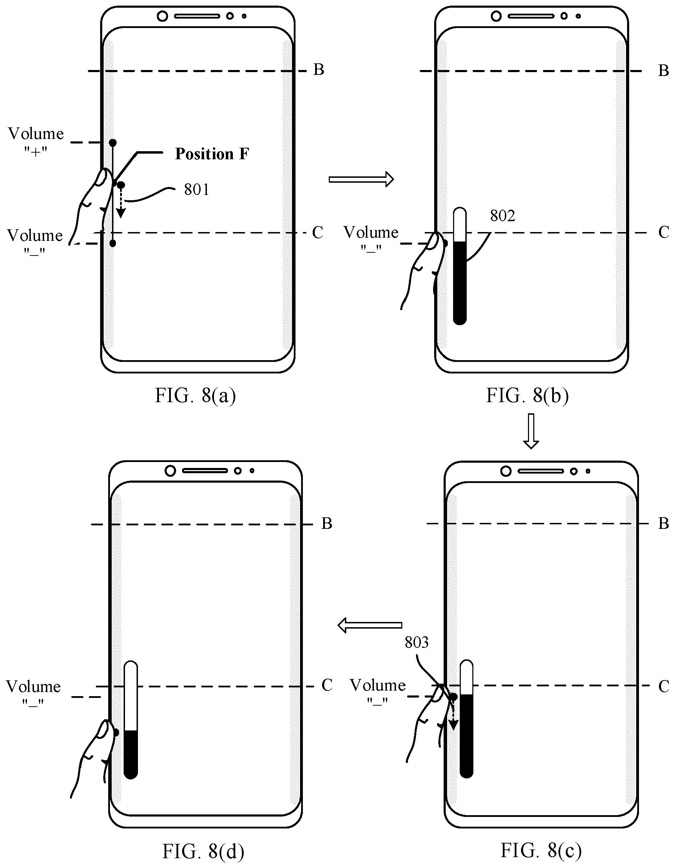

For example, the curved screen of the electronic device displays the prompt information for volume interaction shown in FIG. 6(c). The thumb of the user continues to perform an operation at the position F shown in FIG. 6(c). As shown in FIG. 8(a), after the thumb of the user slides downward from the position F in a direction of a dashed line 801 to a position of the volume "-" virtual button, the volume bar 802 shown in FIG. 8(b) is displayed, where a volume value of the volume bar 802 is flush with the operation position of the thumb. That is, the volume value of the volume bar 802 changes with the operation of the thumb of the user. To be specific, a progress of the volume bar corresponds to a sliding position of the finger. Then the thumb of the user may continue to slide downward in the direction of a dashed line 803 shown in FIG. 8(c), and the volume may be decreased to a level shown in FIG. 8(d).

In some other examples, alternatively, after the curved screen of the electronic device displays the prompt information for volume interaction shown in FIG. 7(a), the thumb lifts off the curved screen, and then taps the position of the volume "+" virtual button. The curved screen displays the volume bar 702 shown in FIG. 7(b). Similarly, after the curved screen of the electronic device displays the prompt information for volume interaction shown in FIG. 8(a), the thumb lifts off the curved screen, and then taps the position of the volume "-" virtual button. The curved screen displays the volume bar 802 shown in FIG. 8(b).

To further improve user experience, when the thumb touches the position of the volume "+" virtual button or the position of the volume "-" virtual button, the mobile phone vibrates to notify the user that a finger reaches a position at which the volume can be adjusted.

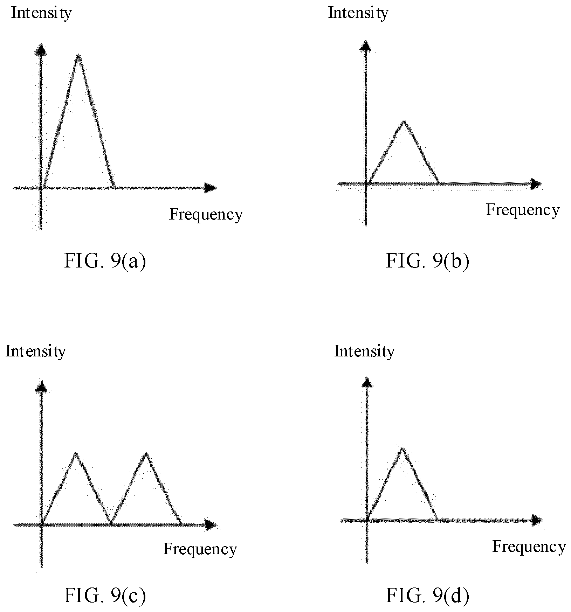

In a possible implementation, different vibration intensities may be used to notify the user that the thumb reaches the position of the volume "+" virtual button or the position of the volume "-" virtual button. For example, when the finger reaches the position of the volume "+" virtual button shown in FIG. 7(b), the user is prompted according to a vibration intensity shown in FIG. 9(a), and when the finger reaches the position of the volume "-" virtual button shown in FIG. 8(b), the user is prompted according to a vibration intensity shown in FIG. 9(b), where the vibration intensity shown in FIG. 9(a) is greater than the vibration intensity shown in FIG. 9(b). It should be understood that, in some other examples, the vibration intensity shown in FIG. 9(a) may also be used to notify the user that the finger reaches the position of the volume "-" virtual button, and the vibration intensity shown in FIG. 9(b) is used to notify the user that the finger reaches the position of the volume "+" virtual button. Thus the user can determine a position that the finger reaches by sensing a vibration intensity without looking at the screen.

In another possible implementation, different vibration frequencies may be used to notify the user that the thumb reaches the position of the volume "+" virtual button or the position of the volume "-" virtual button. For example, when the finger reaches the position of the volume "+" virtual button shown in FIG. 7(b), the user is prompted according to a vibration frequency shown in FIG. 9(c), and when the finger reaches the position of the volume "-" virtual button shown in FIG. 8(b), the user is prompted according to a vibration frequency shown in FIG. 9(d). That is, when the finger reaches the position of the volume "+" virtual button, the mobile phone vibrates twice, and when the finger reaches the volume "-" virtual button, the mobile phone vibrates once. It should be understood that the vibration frequencies may be set based on an actual requirement. This is not limited in this disclosure. In some other examples, a higher vibration frequency may be used to notify the user that the finger reaches the position of the volume "-" virtual button, and a lower vibration frequency may be used to notify the user that the finger reaches the position of the volume "+" virtual button. Then the user can determine a position that the finger reaches by sensing a vibration frequency without looking at the screen.

For example, the finger of the user slides to the position of the volume "+" virtual button, and the curved screen displays the volume bar 702. Then, the volume may be adjusted in a sliding manner shown in FIG. 7(c), or may be adjusted in a plurality of other manners.

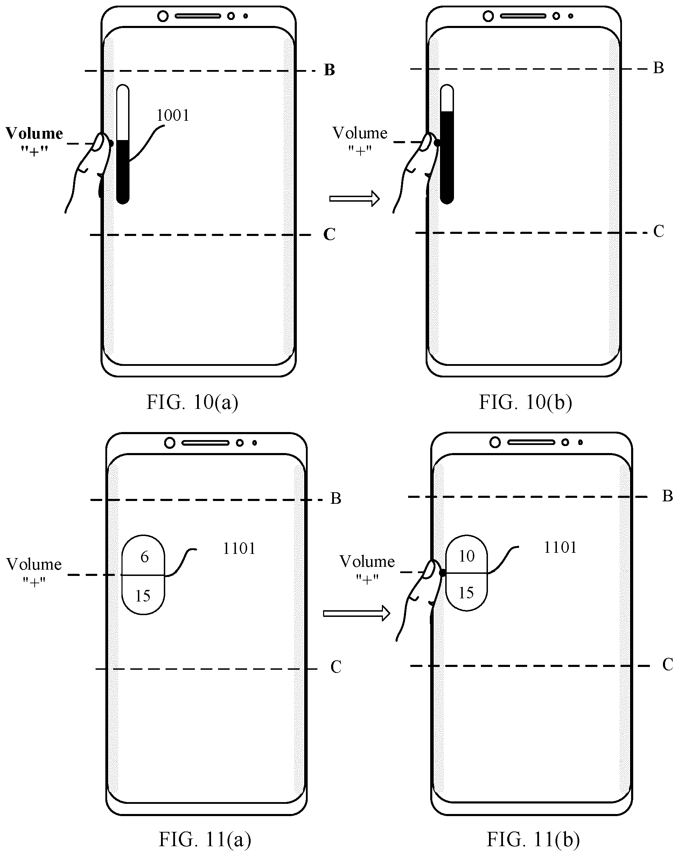

An adjustment manner is to adjust the volume with a non-pressure press. As shown in FIG. 10(a), the finger of the user performs a non-pressure tap on the position of the volume "+" virtual button, the volume can be decreased to a level shown in FIG. 10(b). For example, the finger of the user performs a non-pressure tap once at the position of the volume "+" virtual button, and the volume is increased by one level. The finger of the user lifts off the curved screen, and performs a non-pressure tap again at the position of the volume "+" virtual button, and the volume is increased by one level again. The finger of the user keeps touching the position of the volume "+" virtual button without pressure, and does not lift off. After the finger touches the virtual button for a specific period of time, the mobile phone is in a continuous volume adjustment status until the volume reaches the maximum.

Another adjustment manner is to adjust the volume with a pressure press. In this manner, a pressure sensor needs to be disposed on a side of the curved screen to detect pressure. For example, if pressure of a press by the finger of the user at the position of the volume "+" virtual button is greater than a pressure threshold, the volume is increased by one level. After the pressure of the press by the finger of the user at the position of the volume "+" virtual button is less than the pressure threshold, a press is again performed until pressure is greater than the pressure threshold, and then the volume is increased by one level again. If a continuous press by the finger of the user at the position of the volume "+" virtual button reaches a specific period of time, and the pressure maintains greater than the pressure threshold, the mobile phone is in a continuous volume adjustment status until the volume reaches the maximum.

In the foregoing two adjustment manners, when the mobile phone is in the continuous volume adjustment status, the volume may increase at a uniform speed, or not at a uniform speed. For example, speed change may first be slow and then gradually become faster. For example, initially, a volume increase of one level takes 300 ms. After the volume is increased by three levels, a volume increase of one level takes 200 ms. After the volume is increased by one level, a volume increase of one level takes 100 ms. Similarly, the volume increase speed may change at a uniform speed, or not at a uniform speed. Details are not described herein again.

In the foregoing example, when the user needs to adjust the volume, the curved screen displays a volume adjustment result by displaying the volume bar. In some other examples, a number may be used to represent volume. For example, after the prompt information for volume interaction shown in FIG. 6(c) is displayed on the curved screen, the thumb slides to the position of the volume "+" virtual button, and a digital bar 1101 shown in FIG. 11(a) is displayed. The digital bar 1101 includes two values, where one value represents an actual value of current volume and the other represents a total volume value. In FIG. 11 (a), a total volume value is 15, and an actual volume value before an operation is performed on the volume "+" virtual button is 6. Refer to FIG. 11(b), after the position of the volume "+" virtual button is pressed by the thumb, the volume is increased to 10.

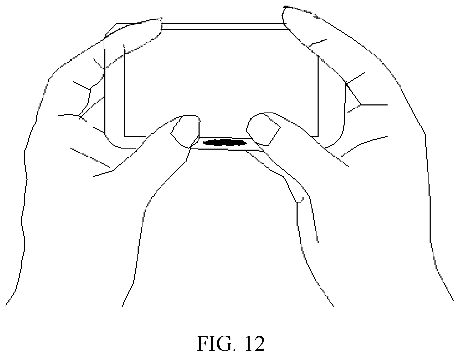

In examples of this disclosure, when a mobile phone is in portrait mode, considering a habit of holding the mobile phone with one hand, a user usually perform an operation more conveniently at a position in the middle of the mobile phone or above the middle of the mobile phone. In some other scenarios, for example, a game playing scenario, the user often rotates the mobile phone so that the mobile phone is in landscape mode. As shown in FIG. 12, the user holds the mobile phone with a left hand and a right hand. A left index finger is placed at a top-left corner of a landscape screen of the mobile phone, and a right index finger is placed at a top-right corner of the landscape screen of the mobile phone. If an interaction area for volume adjustment is the same as that in portrait mode, the interaction area is at a position that can be easily touched by the left and right index fingers. In this case, when the user is playing a game, the left index finger and the right index finger are prone to accidentally touch a response area for volume adjustment in a side area. As a result, a misoperation is generated.

To prevent a misoperation by a finger when the mobile phone is in landscape mode, the mobile phone may identify whether the mobile phone is in portrait mode or landscape mode by using a gyroscope sensor and a gravity sensor. When the mobile phone detects a switch from portrait mode to landscape mode, the interaction area for volume adjustment on the side is automatically switched to a top side area or a bottom side area when the mobile phone is in landscape mode, and is in a middle area of the side area, so that an area prone to accidental touch in the top-left corner and the top-right corner can be avoided.

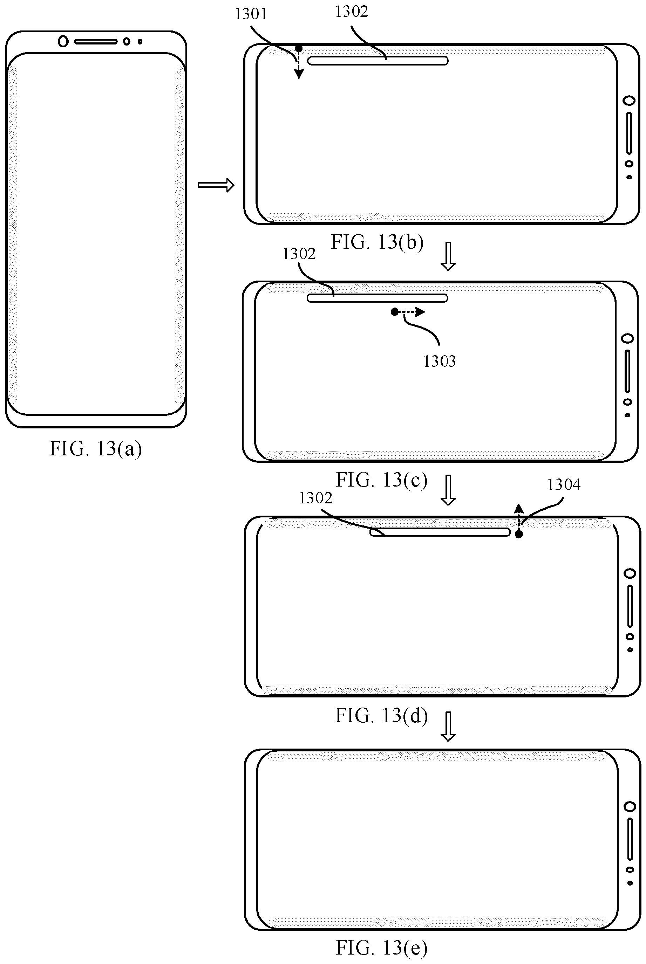

For example, when it is detected that the mobile phone is switched from portrait mode shown in FIG. 13(a) to landscape mode shown in FIG. 13(b), a prompt bar 1302 is displayed inwardly (in a direction of a dashed line 1301) from an edge of a side area of the mobile phone. The prompt bar 1302 is used to indicate the interaction area for volume adjustment, and the prompt bar 1302 is on a left side of the side area. Then, refer to FIG. 13(c). The mobile phone automatically moves the prompt bar 1302 in a direction of a dashed line 1303 to a middle position of the side area shown in FIG. 13(d). Then, the prompt bar 1302 moves in a direction of a dashed line 1304 until it disappears, as shown in FIG. 13(e).

When it is detected that the mobile phone is switched from landscape mode shown in FIG. 13(d) to portrait mode shown in FIG. 13(a), the prompt bar moves from the middle position of the side area to an upper position.

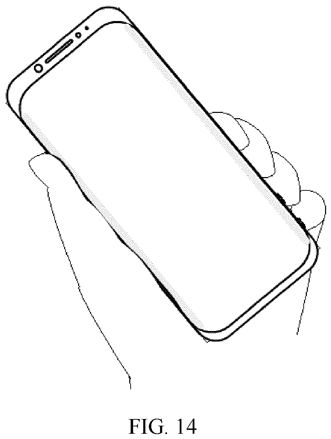

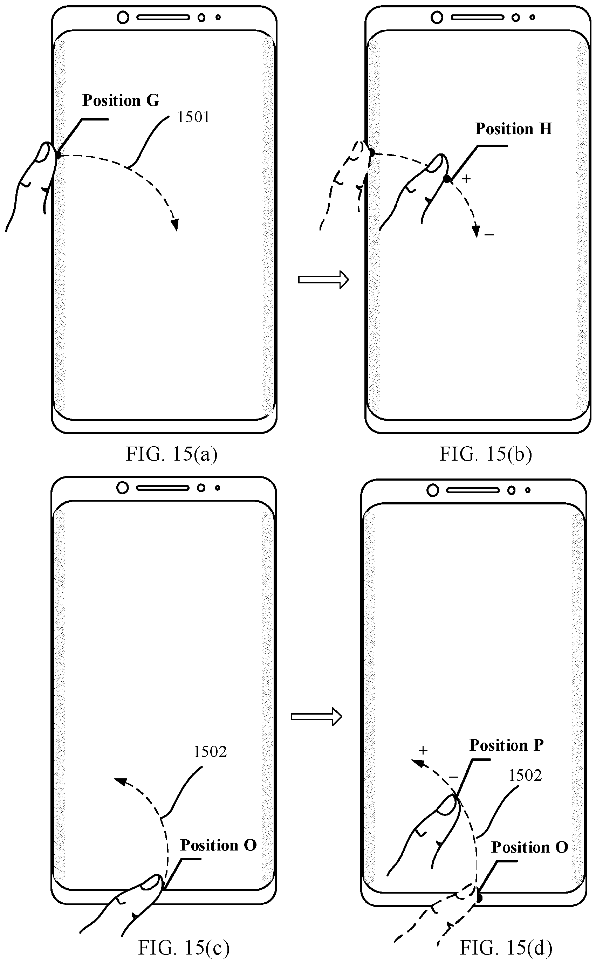

In some other scenarios, such as a calling scenario, as shown in FIG. 14, a user holds a mobile phone with a left hand, and a curved screen of the mobile phone is against an ear of the user. In this scenario, the user thinks that a call sound is small and wants to increase volume, or the user thinks that the call sound is loud and wants to decrease the volume. However, to avoid missing important information from a peer end, it is inconvenient for the user to perform volume adjustment without looking at the screen of the mobile phone. An example of this disclosure provides another volume adjustment manner. Volume is adjusted by sliding on a curved screen. The following describes the manner in detail with reference to FIG. 15(a) to FIG. 15(d).

When the user wants to decrease volume, a thumb slides from a side of a mobile phone into a screen. Refer to FIG. 15(a). The thumb slides inward from a position G in a direction of a dashed line 1501 until a slide distance reaches a preset distance, and the mobile phone performs a vibration prompt. As shown in FIG. 15(b), the vibration prompt is performed at a position H, where the slide distance is a straight-line distance between the position H and the position G. Then the thumb continues to slide inward to enter a volume decrease state. In other words, the thumb continues to slide inward, and the volume gradually decreases.

When the user wants to increase the volume, the thumb may slide from a bottom of the mobile phone into the screen. Refer to FIG. 15(c). The thumb slides inward from a position O in a direction of a dashed line 1502 until a slide distance reaches a preset distance, and a vibration prompt is performed. As shown in FIG. 15(d), the vibration prompt is performed at a position P, where the slide distance is a straight-line distance between the position O and the position P. Then the thumb continues to slide inward to enter a volume increase state. In other words, the thumb continues to slide inward, and the volume gradually increases.

In the examples in FIG. 15(a) to FIG. 15(d), when a display of the mobile phone is in a screen-off state or a screen-on state, a touch sensor detects a slide operation of a finger, to perform detection of a touch position of the finger and volume adjustment. In this example, the user can easily adjust the volume when looking at the screen is inconvenient.

In this example of this disclosure, an example in which an operation is performed in a side area to adjust volume is used to describe a function that can be implemented by the side area. In some other examples, another function may also be implemented by the side area. For example, different functions may be triggered by using different gestures. For example, a double tap triggers a function of a power button, and a one-off pressure press triggers a volume adjustment function. For another example, when the screen is off, a double tap is performed on the side area to turn on the screen. When the screen is on, a double tap is performed on the side area to turn off the screen. For still another example, a double pressure press triggers a payment function, and a one-off pressure press triggers a volume adjustment function, where the double pressure press refers to two presses of which pressure is greater than a specific threshold within 200 ms.

The foregoing example of adjusting volume may also be replaced by triggering another function. For example, in FIG. 7(a), the thumb of the user slides upward from the position F to the position of the volume "+" virtual button to trigger a volume increase function, and slides downward from the position F to the position of the volume "-" virtual button to trigger a volume decrease function. In some other examples, the position of the volume "+" virtual button and the position of the volume "-" virtual button may be set to other functions. For example, a screenshot function is triggered by sliding upward from the position F to the position of the volume "+" virtual button. A two-dimensional code payment function is triggered by sliding downward from the position F to the position of the volume "-" virtual button.

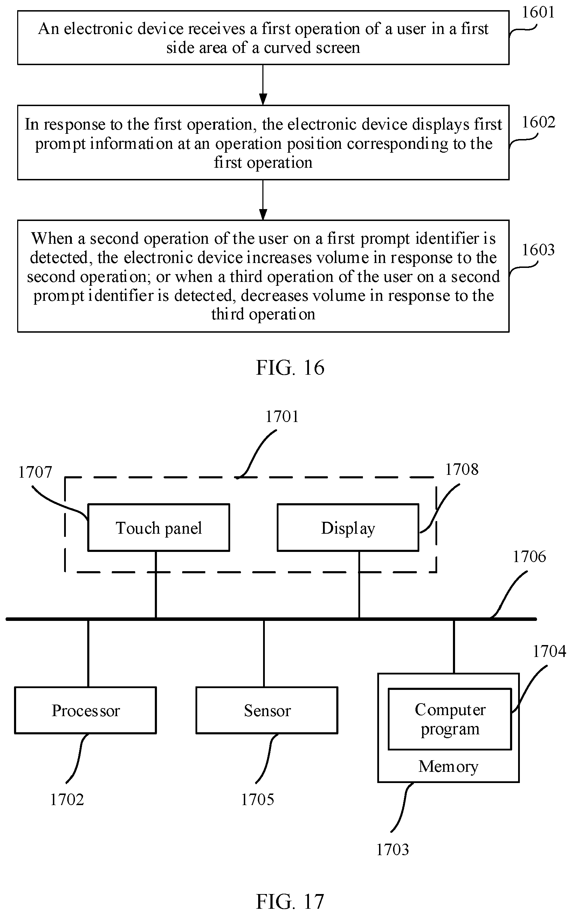

Refer to FIG. 16. FIG. 16 shows an example of a procedure of a volume adjustment method according to an example of this disclosure. The method is performed by an electronic device.

Step 1601: The electronic device receives a first operation of a user in a first side area of a curved screen, where the first side area is either a left side or a right side.

Step 1602: In response to the first operation, the electronic device displays first prompt information at an operation position corresponding to the first operation, where the first prompt information includes a first prompt identifier used to increase volume and a second prompt identifier used to decrease the volume.

For example, the first prompt information may be prompt information for volume interaction. The first prompt identifier may be a volume up virtual button in the foregoing example. The second prompt identifier may be a volume down virtual button.

Step 1603: When a second operation of the user on the first prompt identifier is detected, the electronic device increases the volume in response to the second operation; or when a third operation of the user on the second prompt identifier is detected, the electronic device decreases the volume in response to the third operation.

In a possible design, any one of the first operation, the second operation, and the third operation is a slide operation or a press operation.

In a possible design, the increasing the volume in response to a second operation when the second operation of the user on the first prompt identifier is received may include: when the second operation of the user on the first prompt identifier is received, increasing the volume in response to the second operation, and displaying second prompt information at an operation position corresponding to the second operation, where the second prompt information is used to indicate a change status of the volume increase. The decreasing the volume in response to the third operation when the third operation of the user on the second prompt identifier is received may include: when the third operation of the user on the second prompt identifier is received, decreasing the volume in response to the third operation, and displaying third prompt information at an operation position corresponding to the third operation, where the third prompt information is used to indicate a change status of the volume decrease. In this way, when the operations of the user on the first prompt identifier and the second prompt identifier are received, the corresponding prompt information is displayed, so that the user can learn a volume change status.

In a possible design, both the second prompt information and the third prompt information are volume bars, such as the volume bar 702; or both the second prompt information and the third prompt information are volume values, such as the digital bar 1101.

In a possible design, the method may further include: If both the second prompt information and the third prompt information are the volume bars, when a finger of the user slides in the first side area, a position of the volume bar corresponds to a slide position of the finger. In other words, when the user performs the second operation on the first prompt identifier, the volume is increased in response to the second operation, and the volume bar is displayed. When the user performs the third operation on the second prompt identifier, the volume is decreased in response to the third operation, and the volume bar is displayed. In addition, a progress of the volume bar corresponds to the slide position of the finger of the user. To be specific, the progress of the volume bar reaches a position to which the finger slides, so that user experience can be improved.

In a possible design, if both the second prompt information and the third prompt information are the volume values, the volume values include a first value used to indicate current volume and a second value used to indicate maximum volume.

In a possible design, the first prompt identifier and the second prompt identifier are dots. In this way, an effect of prompting the user can be achieved while viewing other content on the screen by the user is not affected. Alternatively, the first prompt identifier is a plus sign, and the second prompt identifier is a minus sign. The plus sign may more intuitively indicate an operation position used to increase the volume, and the minus sign may more intuitively indicate an operation position used to decrease the volume.

In a possible design, a distance between the first prompt identifier and the operation position corresponding to the first operation is less than a distance between the second prompt identifier and the operation position corresponding to the first operation. In this way, an accidental touch occurs only when a thumb slides downward for a larger distance, and a downward distance is greater than an upward distance. The thumb is less likely to reach a position of the second prompt identifier, thus a probability of the accidental touch is reduced.

In a possible design, the first side area may be an entire side or a partial side of the curved screen.

In a possible design, a curvature of the arc is greater than 70 degrees.

In a possible design, the method further includes: when the second operation of the user on the first prompt identifier is received, prompting the user through vibration with a first vibration intensity; or when the third operation of the user on the second prompt identifier is received, prompting the user through vibration with a second vibration intensity, where the first vibration intensity differs from the second vibration intensity, for example, the first vibration intensity is greater than the second vibration intensity. In this way, the user can determine positions that the finger reaches by sensing different vibration intensities without looking at the screen.

In a possible design, the method further includes: when the second operation of the user on the first prompt identifier is received, prompting the user through vibration with a first vibration frequency; or when the third operation of the user on the second prompt identifier is received, prompting the user through vibration with a second vibration frequency, where the first vibration frequency differs from the second vibration frequency, for example, the first vibration frequency is higher than the second vibration frequency. In this way, the user can determine positions that the finger reaches by sensing different vibration frequencies without looking at the screen.

In a possible design, the method further includes: when it is detected that the electronic device is switched from portrait mode to landscape mode, moving a display area of the first prompt information from an area near an end of the first side area to a middle area of the first side area. In this way, a misoperation caused by the finger of the user often accidentally touching an area near an end of a side area when the screen is in landscape mode can be prevented.

When hardware is used for implementation, for hardware implementation of the electronic device, refer to FIG. 17 and related description.

Refer to FIG. 17. The electronic device 100 includes a curved screen 1701 that includes a touch panel 1707 and a display 1708; one or more processors 1702; a memory 1703; one or more applications (not shown); and one or more computer programs 1704 and sensors 1705. The foregoing components may be connected by one or more communications buses 1706. The one or more computer programs 1704 are stored in the memory 1703 and are executed by the one or more processors 1702. The one or more computer programs 1704 include instructions, and the instructions may be used to perform the method in any one of the foregoing examples.

According to an example of this disclosure, a computer storage medium is further provided. The computer storage medium stores computer instructions. When the computer instructions are run on an electronic device, the electronic device is enabled to perform the related method steps to implement the volume adjustment methods in the foregoing examples.

According to an example of this disclosure, a computer program product is further provided. When the computer program product is run on a computer, the computer is enabled to perform the foregoing related steps, to implement the volume adjustment methods in the foregoing examples.

In addition, an example of this disclosure further provides an apparatus. The apparatus may be specifically a chip, a component, or a module. The apparatus may include a processor and a memory that are connected to each other. The memory is configured to store a computer-executable instruction. When the apparatus runs, the processor may execute the computer-executable instruction stored in the memory, to enable the chip to perform the translation methods in the foregoing method examples.

The electronic device, the computer storage medium, the computer program product, or the chip provided in examples of this disclosure may be all configured to perform the corresponding methods provided above. Therefore, for beneficial effects that can be achieved, refer to the beneficial effects of the corresponding methods provided above. Details are not described herein again.

The foregoing descriptions about implementations allow a person skilled in the art to understand that, for convenient and brief description, division into the foregoing function modules is used as an example for illustration. During actual application, the foregoing functions may be allocated to different function modules based on a requirement, in other words, an inner structure of an apparatus is divided into different function modules to complete all or some of the functions described above.

In the several examples provided in this disclosure, it should be understood that the disclosed apparatus and method may be implemented in other manners. For example, the described apparatus example is merely an example. For example, division into the modules or units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may be one or more physical units, may be located in one place, or may be distributed on different places. Some or all of the units may be selected based on an actual requirement to achieve an objective of the solutions of examples.

In addition, functional units in examples of this disclosure may be integrated into one processing unit, or each of the units may exist alone physically, or two or more units may be integrated into one unit. The integrated unit may be implemented in a form of hardware, or may be implemented in a form of a software functional unit.
When the integrated unit is implemented in the form of the software functional unit and sold or used as an independent product, the integrated unit may be stored in a readable storage medium. Based on such an understanding, the technical solutions of examples of this disclosure essentially, or the part contributing to the conventional art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in examples of this disclosure. The foregoing storage medium includes any medium that can store program code, such as a USB flash drive, a removable hard disk drive, a read only memory (read only memory, ROM), a random access memory (random access memory, RAM), a magnetic disk, or an optical disc.

## Claims

1. A volume adjustment method, applied to an electronic device (100) having a curved screen (1701) with a left side (501) and a right side (502) both being arc-shaped, wherein the method comprises:
receiving a first operation of a user in a first side area of the curved screen (1701), wherein the first side area is either the left side (501) or the right side (502);
in response to the first operation, displaying first prompt information at an operation position corresponding to the first operation, wherein the first prompt information comprises a first prompt identifier used to increase volume and a second prompt identifier used to decrease the volume; and
increasing the volume in response to a second operation when the second operation of the user on the first prompt identifier is detected and displaying second prompt information at an operation position corresponding to the second operation, wherein the second prompt information is used to indicate a change status of the volume increase; or decreasing the volume in response to a third operation when the third operation of the user on the second prompt identifier is detected and displaying third prompt information at an operation position corresponding to the third operation, wherein the third prompt information is used to indicate a change status of the volume decrease.

2. The method according to claim 1, wherein any one of the first operation, the second operation, and the third operation is a slide operation or a press operation.

3. The method according to claim 1 or 2, wherein both the second prompt information and the third prompt information are volume bars.

4. The method according to claim 1 or 2, wherein both the second prompt information and the third prompt information are volume values.

5. The method according to claim 3, wherein the method further comprises:
when a finger of the user slides in the first side area, a position of the volume bar corresponds to a slide position of the finger.

6. The method according to claim 4, wherein the volume values comprise a first value used to indicate current volume and a second value used to indicate maximum volume.

7. The method according to any one of claims 1 to 6, wherein the first prompt identifier and the second prompt identifier are dots; or the first prompt identifier is a plus sign, and the second prompt identifier is a minus sign.

8. The method according to any one of claims 1 to 7, wherein a distance between the first prompt identifier and the operation position corresponding to the first operation is less than a distance between the second prompt identifier and the operation position corresponding to the first operation.

9. The method according to any one of claims 1 to 8, wherein the first side area is an entire side or a partial side of the curved screen (1701).

10. The method according to any one of claims 1 to 9, wherein a curvature of the arc is greater than 70 degrees.

11. The method according to any one of claims 1 to 10, wherein the method further comprises:
when the second operation of the user on the first prompt identifier is received, prompting the user through vibration with a first vibration intensity; or when the third operation of the user on the second prompt identifier is received, prompting the user through vibration with a second vibration intensity, wherein the first vibration intensity is greater than the second vibration intensity.

12. The method according to any one of claims 1 to 10, wherein the method further comprises:
when the second operation of the user on the first prompt identifier is received, prompting the user through vibration with a first vibration frequency; or
when the third operation of the user on the second prompt identifier is received, prompting the user through vibration with a second vibration frequency, wherein the first vibration frequency is higher than the second vibration frequency.

13. The method according to any one of claims 1 to 12, wherein the method further comprises:
when it is detected that the electronic device (100) is switched from portrait mode to landscape mode, moving a display area of the first prompt information from an area near an end of the first side area to a middle area of the first side area.

14. An electronic device (100), comprising a processor (1702), a memory (1703), and a touchscreen (1707, 1708) having a curved screen (1701), wherein
the touchscreen (1707, 1708) is configured to receive an operation of a user; and
the memory (1703) is configured to store one or more computer programs, and when the computer programs are executed by the processor (1702), the electronic device (100) is enabled to perform the method according to any one of claims 1 to 13.

15. A computer program product, comprising a computer program or instructions, and when the computer program or the instructions are run on an electronic device (100), the electronic device (100) is enabled to perform the method according to any one of claims 1 to 13.

## Patentansprüche

1. Verfahren zum Einstellen einer Lautstärke, das auf eine elektronische Vorrichtung (100) angewendet wird, die einen gekrümmten Bildschirm (1701) mit einer linken Seite (501) und einer rechten Seite (502), die beide bogenförmig sind, aufweist, wobei das Verfahren umfasst:
Empfangen einer ersten Bedienung eines Benutzers in einem ersten Seitenbereich des gekrümmten Bildschirms (1701), wobei der erste Seitenbereich entweder die linke Seite (501) oder die rechte Seite (502) ist;
als Reaktion auf die erste Bedienung, Anzeigen erster Aufforderungsinformationen an einer Bedienungsposition, die der ersten Bedienung entspricht, wobei die ersten Aufforderungsinformationen eine erste Aufforderungskennung, die verwendet wird, um eine Lautstärke zu erhöhen, und eine zweite Aufforderungskennung, die verwendet wird, um die Lautstärke zu verringern, umfasst; und
Erhöhen der Lautstärke als Reaktion auf eine zweite Bedienung, wenn die zweite Bedienung des Benutzers an der ersten Aufforderungskennung erkannt wird, und Anzeigen von zweiten Aufforderungsinformationen an einer Bedienungsposition, die der zweiten Bedienung entspricht, wobei die zweiten Aufforderungsinformationen verwendet werden, um einen Änderungsstatus der Lautstärkeerhöhung anzugeben;
oder Verringern der Lautstärke als Reaktion auf eine dritte Bedienung, wenn die dritte Bedienung des Benutzers an der zweiten Aufforderungskennung erkannt wird, und
Anzeigen von dritten Aufforderungsinformationen an einer Bedienungsposition, die der dritten Bedienung entspricht, wobei die dritten Aufforderungsinformationen verwendet werden, um einen Änderungsstatus der Lautstärkeverringerung anzugeben.

2. Verfahren nach Anspruch 1, wobei eine beliebige der ersten Bedienung, der zweiten Bedienung und der dritten Bedienung eine Gleitbedienung oder eine Drückbedienung ist.

3. Verfahren nach Anspruch 1 oder 2, wobei sowohl die zweiten Aufforderungsinformationen als auch die dritten Aufforderungsinformationen Lautstärkebalken sind.

4. Verfahren nach Anspruch 1 oder 2, wobei sowohl die zweiten Aufforderungsinformationen als auch die dritten Aufforderungsinformationen Lautstärkewerte sind.

5. Verfahren nach Anspruch 3, wobei das Verfahren ferner umfasst:
wenn ein Finger des Benutzers in dem ersten Seitenbereich gleitet, eine Position des Lautstärkebalkens einer Gleitposition des Fingers entspricht.

6. Verfahren nach Anspruch 4, wobei die Lautstärkewerte einen ersten Wert, der verwendet wird, um eine aktuelle Lautstärke anzugeben, und einen zweiten Wert, der verwendet wird, um eine maximale Lautstärke anzugeben, umfassen.

7. Verfahren nach einem der Ansprüche 1 bis 6, wobei die erste Aufforderungskennung und die zweite Aufforderungskennung Punkte sind; oder die erste Aufforderungskennung ein Pluszeichen ist und die zweite Aufforderungskennung ein Minuszeichen ist.

8. Verfahren nach einem der Ansprüche 1 bis 7, wobei ein Abstand zwischen der ersten Aufforderungskennung und der Bedienungsposition, die der ersten Bedienung entspricht, kleiner als ein Abstand zwischen der zweiten Aufforderungskennung und der Bedienungsposition, die der ersten Bedienung entspricht, ist.

9. Verfahren nach einem der Ansprüche 1 bis 8, wobei der erste Seitenbereich eine gesamte Seite oder eine Teilseite des gekrümmten Bildschirms (1701) ist.

10. Verfahren nach einem der Ansprüche 1 bis 9, wobei eine Krümmung des Bogens größer als 70 Grad ist.

11. Verfahren nach einem der Ansprüche 1 bis 10, wobei das Verfahren ferner umfasst: wenn die zweite Bedienung des Benutzers an der ersten Aufforderungskennung empfangen wird, Auffordern des Benutzers durch Vibration mit einer ersten Vibrationsintensität; oder wenn die dritte Bedienung des Benutzers an der zweiten Aufforderungskennung empfangen wird, Auffordern des Benutzers durch Vibration mit einer zweiten Vibrationsintensität, wobei die erste Vibrationsintensität größer als die zweite Vibrationsintensität ist.

12. Verfahren nach einem der Ansprüche 1 bis 10, wobei das Verfahren ferner umfasst:
wenn die zweite Bedienung des Benutzers an der ersten Aufforderungskennung empfangen wird, Auffordern des Benutzers durch Vibration mit einer ersten Vibrationsfrequenz; oder
wenn die dritte Bedienung des Benutzers an der zweiten Aufforderungskennung empfangen wird, Auffordern des Benutzers durch Vibration mit einer zweiten Vibrationsfrequenz, wobei die erste Vibrationsfrequenz höher als die zweite Vibrationsfrequenz ist.

13. Verfahren nach einem der Ansprüche 1 bis 12, wobei das Verfahren ferner umfasst: wenn erfasst wird, dass die elektronische Vorrichtung (100) von Hochformat in Querformat umgeschaltet wird, Bewegen eines Anzeigebereichs der ersten Aufforderungsinformationen von einem Bereich nahe einem Ende des ersten Seitenbereichs zu einem mittleren Bereich des ersten Seitenbereichs.

14. Elektronische Vorrichtung (100), die einen Prozessor (1702), einen Speicher (1703) und einen Berührungsbildschirm (1707, 1708), der einen gekrümmten Bildschirm (1701) aufweist, umfasst, wobei
der Berührungsbildschirm (1707, 1708) konfiguriert ist, um eine Bedienung eines Benutzers zu empfangen; und
der Speicher (1703) konfiguriert ist, um ein oder mehrere Computerprogramme zu speichern, und wenn die Computerprogramme durch den Prozessor (1702) ausgeführt werden, die elektronische Vorrichtung (100) aktiviert wird, um das Verfahren nach einem der Ansprüche 1 bis 13 durchzuführen.

15. Computerprogrammprodukt, das ein Computerprogramm oder Anweisungen umfasst, und wobei, wenn das Computerprogramm oder die Anweisungen auf einer elektronischen Vorrichtung (100) ablaufen, die elektronische Vorrichtung (100) aktiviert wird, um das Verfahren nach einem der Ansprüche 1 bis 13 durchzuführen.

## Revendications

1. Procédé de réglage du volume, appliqué à un dispositif électronique (100) ayant un écran incurvé (1701) dont un côté gauche (501) et un côté droit (502) sont tous deux en forme d'arc, dans lequel le procédé comprend :
la réception d'une première opération d'un utilisateur dans une première zone latérale de l'écran incurvé (1701), dans lequel la première zone latérale est soit le côté gauche (501) soit le côté droit (502) ;
en réponse à la première opération, l'affichage de premières informations d'invite à une position d'opération correspondant à la première opération, dans lequel les premières informations d'invite comprennent un premier identifiant d'invite utilisé pour augmenter le volume et un second identifiant d'invite utilisé pour diminuer le volume ; et
l'augmentation du volume en réponse à une deuxième opération lorsque la deuxième opération de l'utilisateur sur le premier identifiant d'invite est détectée et l'affichage de deuxièmes informations d'invite à une position d'opération correspondant à la deuxième opération, dans lequel les deuxièmes informations d'invite sont utilisées pour indiquer un état de changement de l'augmentation de volume ; ou la diminution du volume en réponse à une troisième opération lorsque la troisième opération de l'utilisateur sur le second identifiant d'invite est détectée et l'affichage de troisièmes informations d'invite à une position d'opération correspondant à la troisième opération, les troisièmes informations d'invite étant utilisées pour indiquer un état de changement de la diminution de volume.

2. Procédé selon la revendication 1, dans lequel l'une quelconque parmi la première opération, la deuxième opération et la troisième opération est une opération de glissement ou une opération de pression.

3. Procédé selon la revendication 1 ou 2, dans lequel à la fois les deuxièmes informations d'invite et les troisièmes informations d'invite sont des barres de volume.

4. Procédé selon la revendication 1 ou 2, dans lequel à la fois les deuxièmes informations d'invite et les troisièmes informations d'invite sont des valeurs de volume.

5. Procédé selon la revendication 3, dans lequel le procédé comprend en outre :
lorsqu'un doigt de l'utilisateur glisse dans la première zone latérale, une position de la barre de volume correspond à une position de glissement du doigt.

6. Procédé selon la revendication 4, dans lequel les valeurs de volume comprennent une première valeur utilisée pour indiquer un volume actuel et une seconde valeur utilisée pour indiquer un volume maximal.

7. Procédé selon l'une quelconque des revendications 1 à 6, dans lequel le premier identifiant d'invite et le second identifiant d'invite sont des points ; ou le premier identifiant d'invite est un signe plus, et le second identifiant d'invite est un signe moins.

8. Procédé selon l'une quelconque des revendications 1 à 7, dans lequel une distance entre le premier identifiant d'invite et la position d'opération correspondant à la première opération est inférieure à une distance entre le second identifiant d'invite et la position d'opération correspondant à la première opération.

9. Procédé selon l'une quelconque des revendications 1 à 8, dans lequel la première zone latérale est un côté entier ou un côté partiel de l'écran incurvé (1701).

10. Procédé selon l'une quelconque des revendications 1 à 9, dans lequel une courbure de l'arc est supérieure à 70 degrés.

11. Procédé selon l'une quelconque des revendications 1 à 10, dans lequel le procédé comprend en outre :
lorsque la deuxième opération de l'utilisateur sur le premier identifiant d'invite est reçue, un message d'incitation à vibrer à une première intensité de vibration ; ou
lorsque la troisième opération de l'utilisateur sur le second identifiant d'invite est reçue, un message d'incitation à vibrer à une seconde intensité de vibration, dans lequel la première intensité de vibration est supérieure à la seconde intensité de vibration.

12. Procédé selon l'une quelconque des revendications 1 à 10, dans lequel le procédé comprend en outre :
lorsque la deuxième opération de l'utilisateur sur le premier identifiant d'invite est reçue, un message d'incitation à vibrer à une première fréquence de vibration ; ou
lorsque la troisième opération de l'utilisateur sur le second identifiant d'invite est reçue, un message d'incitation à vibrer à une seconde fréquence de vibration, dans lequel la première fréquence de vibration est supérieure à la seconde fréquence de vibration.

13. Procédé selon l'une quelconque des revendications 1 à 12, dans lequel le procédé comprend en outre :
lorsqu'il est détecté que le dispositif électronique (100) est commuté du mode portrait au mode paysage, le déplacement d'une zone d'affichage de la première information d'invite d'une zone proche d'une extrémité de la première zone latérale à une zone médiane de la première zone latérale.

14. Dispositif électronique (100) comprenant un processeur (1702), une mémoire (1703), un écran tactile (1707, 1708) ayant un écran incurvé (1701), dans lequel l'écran tactile (1707, 1708) est configuré pour recevoir une opération d'un premier utilisateur ; et
la mémoire (1703) est configurée pour stocker un ou plusieurs programmes informatiques, et lorsque les programmes informatiques sont exécutés par le processeur (1702), le dispositif électronique (100) est activé pour réaliser le procédé selon l'une quelconque des revendications 1 à 13.

15. Produit-programme informatique comprenant un programme informatique ou des instructions, et lorsque le programme informatique ou les instructions sont exploités sur un dispositif électronique (100), le dispositif électronique (100) est activé pour réaliser le procédé selon l'une quelconque des revendications 1 à 13.
